(19) Europäisches Patentamt
European Patent Office
Office européen des brevets

(11) EP 2 045 802 A1

(12) EUROPEAN PATENT APPLICATION

(43) Date of publication:
08.04.2009 Bulletin 2009/15

(51) Int Cl.:
G11B 7/0065 (2006.01)     G11B 7/007 (2006.01)
G11B 7/24 (2006.01)     G11B 7/09 (2006.01)

(21) Application number: 08165471.7

(22) Date of filing: 30.09.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(30) Priority: 04.10.2007 JP 2007261345

(71) Applicant: Sony Corporation
Tokyo 108-0075 (JP)

(72) Inventors:
• Tanabe, Norihiro
TOKYO 108-0075 (JP)
• Fukushima, Yoshihito
TOKYO 108-0075 (JP)

(74) Representative: Körber, Martin Hans
Mitscherlich & Partner
Sonnenstrasse 33
80331 München (DE)

(54) **Optical information recording medium**

(57) An optical information recording medium includes: a recording area on which an interfering beam formed where a first beam and a second beam whose converging angle is smaller than that of the first beam overlap each other is recorded as a hologram, the first and second beams being emitted from the same light source with the first beam directed to one surface and the second beam directed to the other surface; a first base area that covers the recording area's one surface to which the first beam is emitted, and allows the first beam to pass therethrough; and a second base area that is made thicker than the first base area, covers the recording area's other surface to which the second beam is emitted, and allows the second beam to pass therethrough.

FIG. 4

EP 2 045 802 A1

**Description**

<u>CROSS REFERENCES TO RELATED APPLICATIONS</u>

The present invention contains subject matter related to Japanese Patent Application JP2007-261345 filed in the Japanese Patent Office on October 4, 2007, the entire contents of which being incorporated herein by reference.

<u>BACKGROUND OF THE INVENTION</u>

<u>FIELD OF THE INVENTION</u>

The present invention relates to an optical information recording medium, and is preferably applied to an optical disc that records a hologram on the optical disc, for example.

<u>DESCRIPTION OF THE RELATED ART</u>

Optical disc devices that can reproduce information from optical discs, such as Compact Disc (CD), Digital Versatile Disc (DVD), and "Blu-ray Disc (Registered Trademark: also referred to as "BD")," by emitting an optical beam to them and reading the reflection have been very popular.

Moreover, the above optical disc device emits an optical beam to the optical disc to change reflectance and the like locally on the optical disc. In this manner, information is recorded.

As for this optical disc, it is known that the size of an optical spot formed on the optical disc is substantially determined based on $\lambda/NA$ ($\lambda$ is a wavelength of an optical beam while NA means numerical aperture), and that the resolution is in proportion to the value of $\lambda/NA$. For example, BD that can record 25 GB of data on its 120 mm-diameter optical disc is detailed in Y.Kasami, y.Kuroda, K.Seo, O.Kawakubo, S.Takagawa, M.Ono, and M.Yamada, Jpn. J. Appl. Phys., 39, 756(2000).

By the way, various kinds of information, such as various kinds of content including music content and video content, and various kinds of data including data for computers, can be recorded on optical discs. Especially in recent years, an amount of information is increasing due to improvements in graphic resolution and sound quality, and there is a demand for an optical disc that can store more pieces of content. Accordingly, there is a demand for larger capacity of optical discs.

Accordingly, as disclosed in I.Ichimura et al. Techinical Digest of ISOM '04, pp52, Oct. 11-15, 2005, Jeju, Korea, it is proposed to increase the capacity of optical discs by putting together a plurality of recording layers inside an optical disc.

On the other hand, as an information recording method for optical discs, it is proposed that an optical disc device uses holograms, as disclosed in R. R. McLeod et al. "Microholographic multilayeroptical disk data storage," Appl. Opt., Vol. 44, 2005, pp3197.

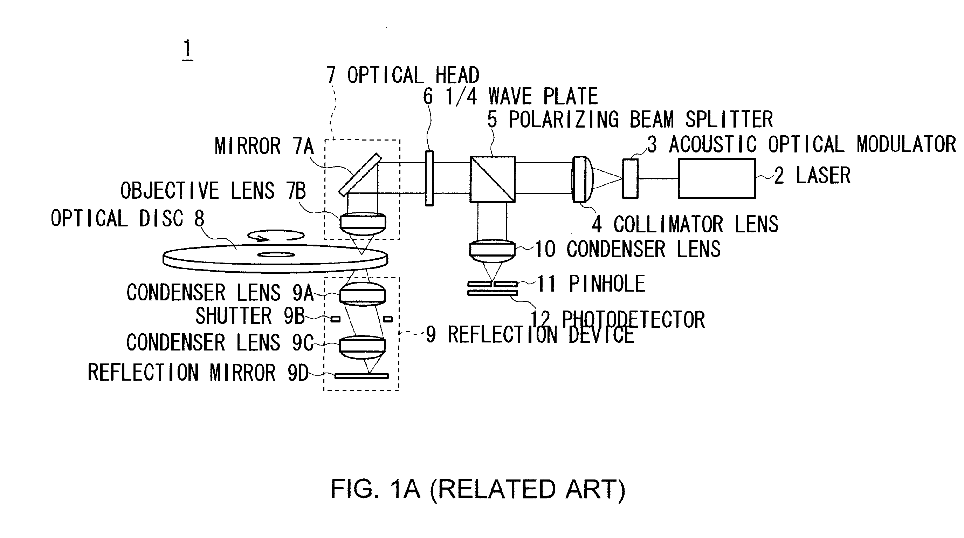

For example, as shown in FIG. 1, an optical disc device 1 emits an optical beam from an optical head 7 and focuses the optical beam on a point inside an optical disk 8 that is made from materials such as photopolymer whose refractive index changes according to the intensity of the emitted beam. After that, using an reflection device 9 provided under the optical disk 8 (i.e. at the bottom part of FIG. 1), the optical disc device 1 emits an optical beam from behind the optical disc 8 and focuses the optical beam on the same point.

The optical disc device 1 emits an optical beam, or laser light, from a laser 2, modulates its optical wave using an acoustic optical modulator 3, and collimate it using a collimator lens 4. Subsequently, the optical beam passes through a polarized beam splitter 5, and is converted by a 1/4 wave plate 6 from linearly polarized light to circularly polarized light before entering the optical head 7.

The optical head 7 is able to record and reproduce information. A mirror 7A reflects the optical beam, and an objective lens 7B collects it before emitting it to the optical disc 8 rotated by a spindle motor (not shown).

At this time, after being focused on a point inside the optical disc 8, the optical beam is reflected by the reflection device 9 situated under the optical disk 8, and is emitted to the same point from behind the optical disc 8. Incidentally, the reflection device 9 includes a condenser lens 9A, a shutter 9B, a condenser lens 9C and a reflection mirror 9D.

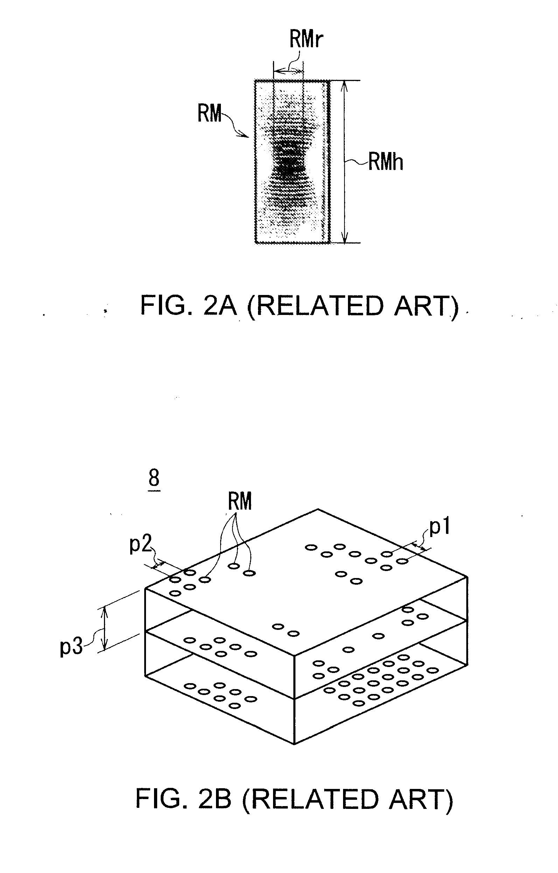

As a result, as shown in FIG. 2A, standing waves occur at the optical beam's focal point, and a recording mark RM, or a hologram, is formed: the size of the hologram is equivalent to that of an optical spot, and its shape resembles the shape of two cones combined at their bases. In this manner, the recording mark RM is recorded as information.

When recording a plurality of recording marks RM inside the optical disc 8, the optical disc device 1 rotates the optical disc 8 to form each recording mark RM along a concentric or spiral track to generate one mark recording layer. Moreover, by adjusting a focal point of the optical beam, the optical disc device 1 can record each recording mark RM such that mark recording layers pile up.

Accordingly, the optical disc 8 has a multilayer structure having a plurality of mark recording layers. For example, in the optical disc 8, as shown in FIG. 2B, a distance between the recording marks RM (mark pitch) p1 is 1.5 $\mu$m, a distance between tracks (track pitch) p2 is 2 $\mu$m, and a distance between the layers p3 is 22.5 $\mu$m.

Moreover, when reproducing information from the disc 8 on which the recording mark RM are recorded, the optical disc device 1 closes the shutter 9B of the reflection device 9 to stop the emission of the optical beam from behind the optical disc 8.

At this time, the optical disc device 1 controls the optical head 7 to emit an optical beam to the recording marks RM inside the optical disc 8, and leads a reproduction optical beam generated from the recording marks RM to the optical head 7. The reproduction optical beam is converted by the 1/4 wave plate 6 from circularly polarized light to linearly polarized light, and is reflected by the polarized beam splitter 5. After that, the reproduction optical beam is collected by a condenser lens 10 before reaching a photodetector 12 via a pinhole 11.

The photodetector 12 of the optical disc device 1 detects the intensity of the reproduction optical beam. Based on the result of detection, the optical disc device 1 reproduces information.

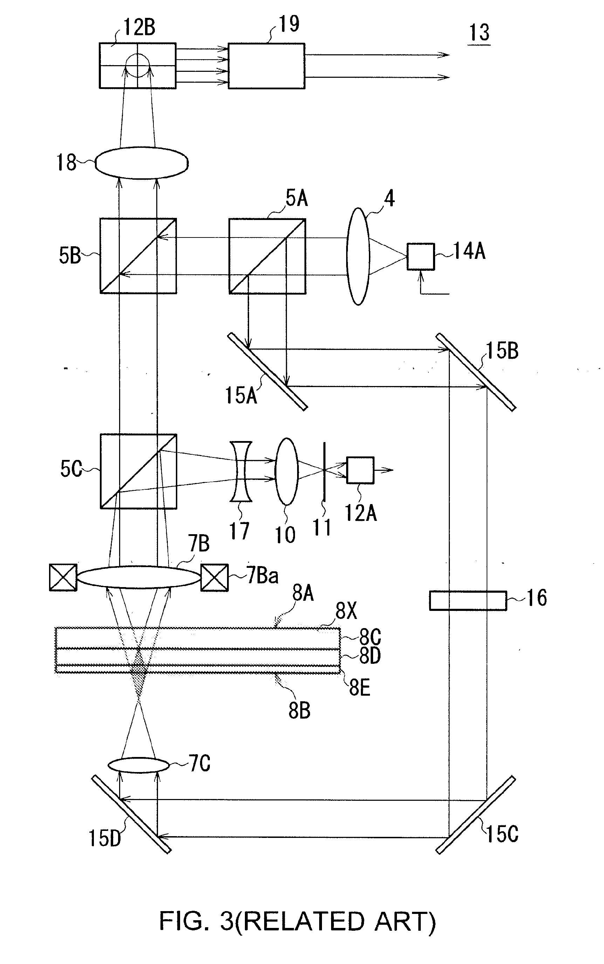

Also, it is proposed in Jpn. Pat. No. 3452106 that, like an optical disc device 13 shown in FIG. 3 whose parts have been designated by the same symbols as the corresponding parts of FIG. 1, during a recording process, an optical beam is divided into two, one of which is directed to the top surface of an optical disc 8 and the other is directed to the back surface of the optical disc 8, so that the two optical beams overlap each other.

In this optical disc device 13, an optical beam emitted from a laser diode 14A is collimated by a collimator lens 4, and is divided by a beam splitter 5A into two optical beams: a first optical beam and a second optical beam.

The optical disc device 13 leads the first optical beam that has passed through the beam splitter 5A to an objective lens 7B via beam splitters 5B and 5C. The objective lens 7B collects the first optical beam and emits it toward a first surface 8A of the optical disc 8X.

At this time, a photodetector 12B of the optical disc device 13 receives part of the first optical beam reflected at a boundary between a base plate 8C and dielectric layer 8D of the optical disc 8X via the objective lens 7B, the beam splitters 5C and 5B, and a cylindrical lens 18. A matrix amplifier 19 of the optical disc device 13 amplifies a detection signal that varies according to the intensity of the received beam. The optical disc device 13 then generates a servo control signal from the amplified detection signal.

And the optical disc device 13 drives an actuator 7Ba based on the servo control signal to move the objective lens 7B.

On the other hand, the optical disc device 13 leads the second optical beam reflected by the beam splitter 5A to a convex lens 7C using mirrors 15A, 15B, 15C and 15D. The convex lens 7C collects the second optical beam and emits it toward a second surface 8B of the optical disc 8X.

At this time, the optical disc device 13 generates a recording mark RM, or a hologram, at an area (shaded area) where the first and second optical beams overlap each other and interfere with each other. In this manner, the recording mark RM is recorded on a recording layer 8E as information.

Moreover, during a reproduction process, the optical disc device 13 blocks the second beam using a shutter 16 placed on an optical path of the second optical beam. And a reproduction optical beam, or the reflection beam generated after the first optical beam is reflected at the recording mark RM recorded on the optical disc 8X, is received by a photodetector 12A via the objective lens 7B, the beam splitter 5C, a concave lens 17, a condenser lens 10 and a pinhole plate 11.

The photodetector 12 detects the intensity of the reproduction optical beam, and the optical disc device 13 reproduces information based on the result of detection.

SUMMARY OF THE INVENTION

By the way, it is considered that the optical disc device 13 could increase the recording density by increasing the numerical aperture NA of the objective lens and making a recording mark small in size.

In this case, if the optical disc 8X is tilted due to the distortion of the optical disc 8X, the vibration of the optical disc 8X rotated, or the like, an aberration occurs (this aberration is referred to as "tilt aberration," hereinafter). Accordingly, the optical disc device 13 may need a certain amount of allowance (so-called tilt margin) for the optical disc 8.

Generally, as the numerical aperture NA of the objective lens increases, the converging angle of the converged optical beam also increases, leading to an increase in tilt aberration. Accordingly, if the objective lens with large numerical aperture NA is used, tilt margin is secured by making a distance from a target mark position which is on the farthest mark recording layer from the objective lens and on which an optical beam is focused to the surface of the optical disc as small as possible to reduce tilt aberration (this distance is referred to as "surface-to-recording distance").

For example, the thickness of a cover layer, which is close to the objective lens, is set at around 0.1 mm for BD, in which case the objective lens' numerical aperture NA is 0.85 and an optical beam is emitted to only one surface of the optical disc. And as for BD, its base plate, to which the optical beam is not emitted, is made thick to secure enough mechanical strength as a whole.

Actually, as for the optical disc 8X whose each surface is exposed to a different optical beam, the recording layer 8E on which a hologram is recorded should be protected. Accordingly, the optical disc 8X includes not only the base plate 8C but also a base plate, as a base layer or a base plate area on which no recording mark is recorded, to protect the recording layer: the base plate is situated at the opposite side of the recording layer 8E. Accordingly, if an objective lens with large numerical aperture NA is used, the two base plates may need to be made thin to make the surface-to-recording distance as small as possible.

However, the first and second optical beams are emitted to either side of the optical disc 8X via two objective lenses. Accordingly, the base plates on either side may need to be made thin for tilt margin. If an objective lens with numerical aperture NA of 0.85, the same one used for BD, is used for the optical disc device 13, the optical disc 8X becomes thin as a whole, making it difficult to secure enough mechanical strength of the optical disc 8X.

That is, if the objective lens' numerical aperture NA is increased to make the recording marks small in size to improve its recording density, this makes it difficult to secure enough mechanical strength of the optical disc 8X.

The present invention has been made in view of the above points and is intended to provide an optical information recording medium with the increased recording density, which is obtained as a result of making recording marks small in size, and with enough mechanical strength.

In one aspect of the present invention, an optical information recording medium includes: a recording area on which an interfering beam formed where a first beam and a second beam whose converging angle is smaller than that of the first beam overlap each other is recorded as a hologram, the first and second beams being emitted from the same light source with the first beam directed to one surface and the second beam directed to the other surface; a first base area that covers the recording area's one surface to which the first beam is emitted, and allows the first beam to pass therethrough; and a second base area that is made thicker than the first base area, covers the recording area's other surface to which the second beam is emitted, and allows the second beam to pass therethrough.

Accordingly, as for the optical information recording medium, the first beam whose converging angle is large enters the first base area, and it is possible to make its beam waist diameter small. Even though the beam waist diameter of the second beam is relatively large, a small recording mark RM can be recorded by a small interfering beam where the first and second beams overlap each other. Moreover, the second base area increases mechanical strength of the optical information recording medium.

According to an embodiment of the present invention, as for the optical information recording medium, the first beam whose converging angle is large enters the first base area, and it is possible to make its beam waist diameter small. Even though the beam waist diameter of the second beam is relatively large, a small recording mark RM can be recorded by a small interfering beam where the first and second beams overlap each other. Moreover, the second base area increases mechanical strength of the optical information recording medium. Thus, an optical information recording medium with the increased recording density, which is obtained as a result of making recording marks small in size, and with enough mechanical strength can be realized.

The nature, principle and utility of the invention will become more apparent from the following detailed description when read in conjunction with the accompanying drawings in which like parts are designated by like reference numerals or characters.

BRIEF DESCRIPTION OF THE DRAWINGS

In the accompanying drawings:

FIG. 1 is a schematic diagram illustrating the configuration of an existing standing-wave-recording-type optical disc device (1) ;
FIG. 2 is a schematic diagram illustrating how a hologram is formed;
FIG. 3 is a schematic diagram illustrating the configuration of an existing standing-wave-recording-type optical disc device (2) ;
FIG. 4 is a schematic diagram to illustrate a basic concept;
FIG. 5 is a schematic diagram illustrating the formation of a hologram (1);
FIG. 6 is a schematic diagram illustrating a focal point and a beam waist;
FIG. 7 is a schematic diagram illustrating the configuration of an optical disc (1);
FIG. 8 is a schematic diagram illustrating the configuration of an optical disc (2);
FIG. 9 is a schematic diagram illustrating the configuration of an optical disc device;
FIG. 10 is a schematic diagram illustrating the appearance of the optical pickup;
FIG. 11 is a schematic diagram illustrating the configuration of an optical pickup;
FIG. 12 is a schematic diagram illustrating an optical path of a red optical beam;
FIG. 13 is a schematic diagram illustrating the configuration of a detection area of a photodetector (1);

FIG. 14 is a schematic diagram illustrating an optical path of a blue optical beam (1);

FIG. 15 is a schematic diagram illustrating an optical path of a blue optical beam (2);

FIG. 16 is a schematic diagram illustrating the configuration of a detection area of a photodetector (2);

FIG. 17 is a schematic diagram illustrating the formation of a hologram (2);

FIG. 18 is a schematic diagram illustrating a wave front of a blue optical beam;

FIG. 19 is a schematic diagram illustrating the definition of directions;

FIG. 20 is a schematic diagram illustrating a surface-direction light intensity distribution;

FIG. 21 is a schematic diagram illustrating a depth-direction light intensity distribution regarding an interfering beam DB1;

FIG. 22 is a schematic diagram illustrating a depth-direction light intensity distribution regarding an interfering beam DB2;

FIG. 23 is a schematic diagram illustrating a depth-direction light intensity distribution regarding an interfering beam DB3;

FIG. 24 is a schematic diagram illustrating the intensity distribution of an interfering beam;

FIG. 25 is a schematic diagram illustrating de-track dependency of diffraction efficiency (1);

FIG. 26 is a schematic diagram illustrating de-track dependency of diffraction efficiency (2);

FIG. 27 is a schematic diagram illustrating de-focus dependency of diffraction efficiency (1);

FIG. 28 is a schematic diagram illustrating de-focus dependency of diffraction efficiency (2);

FIG. 29 is a schematic diagram illustrating the configuration of an optical disc (1) according to another embodiment of the present invention; and

FIG. 30 is a schematic diagram illustrating the configuration of an optical disc (2) according to another embodiment of the present invention.

## DETAILED DESCRIPTION OF PREFERRED EMBODIMENTS

An embodiment of the present invention will be described in detail with reference to the accompanying drawings.

(1) Basic Concept

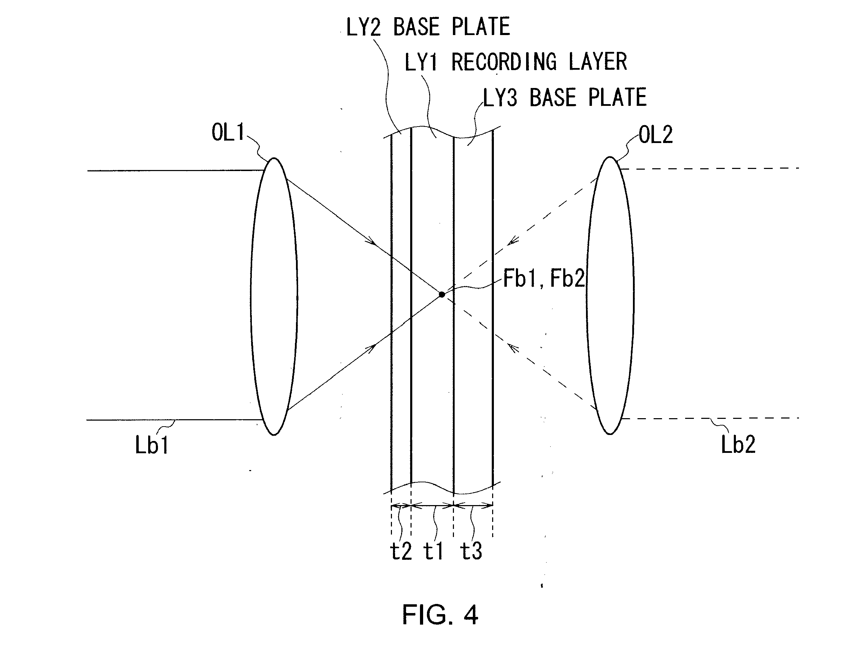

As shown in FIG. 4, an optical disc DC includes a recording layer LY1, and base plates LY2 and LY3, according to an embodiment of the present invention: the recording layer LY1 is sandwiched between the base plates LY2 and LY3. A recording mark RM is formed on the recording layer LY1 to record information.

An optical disc device DV (not shown) divides a blue optical beam Lb0 emitted from a light source into two blue optical beams Lb1 and Lb2. While the blue optical beam Lb1 is emitted to one surface of the optical disc DC (the base plate LY2) via a first objective lens OL1, the blue optical beam Lb2 is emitted to the other surface of the optical disc DC (the base plate LY3) via a second objective lens OL2. In this manner, the recording marks RM are formed.

In the optical disc device DV, if the optical disc DC is tilted due to distortion or vibration, an aberration occurs (this aberration is also referred to as "tilt aberration," hereinafter), leading to such problems as the distorted spots on the optical disc DC. It is known that, as a distance Dp from the surface of the optical disc DC to a position where a recording mark RM is recorded becomes larger, and as the numerical aperture NA of the first and second objective lenses OL1 and OL2 becomes larger, the tilt aberration increases accordingly (the position where a recording mark RM is recorded is referred to as "recording mark position," while the distance from the surface of the optical disc DC to the recording mark position is referred to as "surface-to-recording distance").

In the optical disc device DC, reducing the surface-to-recording distance Dp makes the tilt margin larger. On the other hand, in the optical disc device DV, according to the above-noted characteristics of the aberration, decreasing the numerical aperture NA of the first and second objective lenses OL1 and OL2 makes the tilt margin larger.

According to the embodiment of the present invention, the numerical aperture NA of the first objective lens OL1 is larger than the numerical aperture NA of the second objective lens OL2.

Considering the tilt margin, it may be necessary to decrease the thickness t2 of the base plate LY2: the base plate LY2 is closer to the first objective lens OL1 whose numerical aperture NA is large than the base plate LY1 is. However, this makes it possible to increase the thickness t3 of the base plate LY1: the base plate LY1 is closer to the second objective lens OL2 whose numerical aperture NA is small than the base plate LY2 is. Accordingly, as for the optical disc DC, the thickness ta of the whole optical disc DC can be increased to secure mechanical strength.

As noted above, the recording mark RM, or a hologram, is formed only in a close-overlapping area where an area close to a focal point Fb1 of the blue optical beam Lb1 and an area close to a focal point Fb2 of the blue optical beam Lb2 overlap each other (the area close to the focal point Fb1 is referred to as "focal-point-close area Af1" while the area close to the focal point Fb2 is referred to as "focal-point-close area Af2").

Moreover, a second converging angle $\alpha2$ of the optical beam Lb2 that is collected by the second objective lens OL2 is smaller than a first converging angle $\alpha1$ of the blue optical beam Lb1 that is collected by the first objective lens OL1.

In other words, in the optical disc device DV, the diameter of the blue optical beam Lb2 around the focal point Fb2 is larger than that of the blue optical beam Lb1 around the focal point Fb1 (the diameter of the blue optical beam Lb2 around the focal point Fb2 is referred to as "beam waist diameter S2," while the diameter of the blue optical beam Lb1 around the focal point Fb1 is referred to as "beam waist diameter S1," hereinafter).

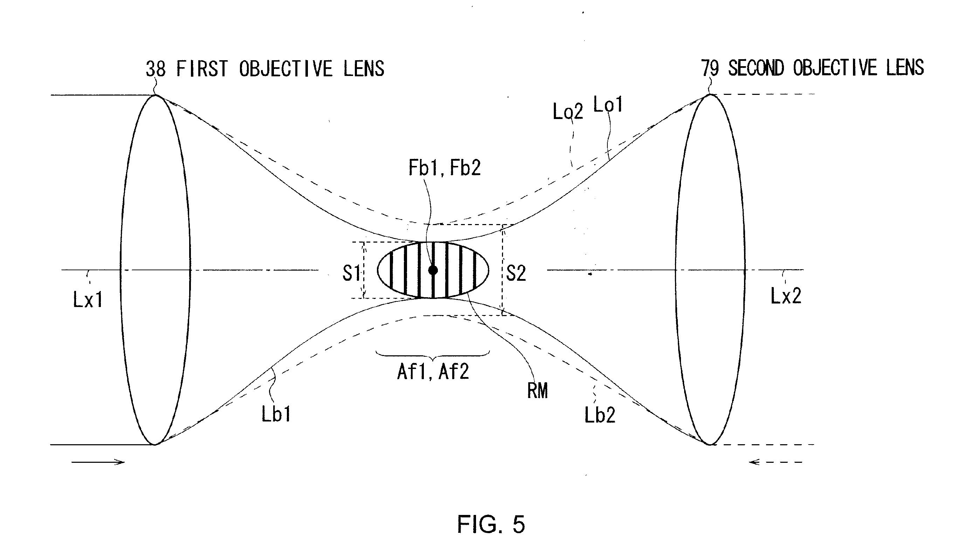

As a result, as shown in FIG. 5, in the direction of beam diameter, only the focal-point-close area Af1 where the blue optical beam Lb1 exists is regarded as the close-overlapping area. The recording mark RM is formed only in the close-overlapping area.

In this manner, since the size of the recording mark RM recorded on the recording layer is determined based on the beam waist diameter S1 of the blue optical beam Lb1, the size of the formed recording mark RM is substantially equal to a recording mark RM generated by overlapping two optical beams of the beam waist diameter S1. Accordingly, despite the optical disc device DV emitting the blue optical beam Lb2 of the beam waist diameter S2, the recording density of the optical disc DC can be maintained.

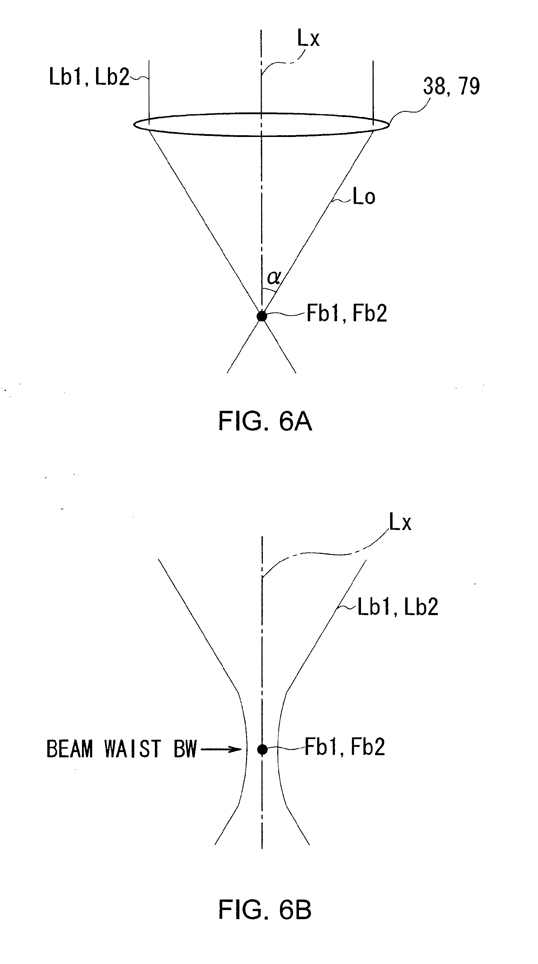

As shown in FIG. 6A, if it is assumed that there is no diffraction phenomenon as for the blue optical beams Lb1 and Lb2, the focal points Fb (Fb1 and Fb2) are image formation points formed on an optical axis Lx of the blue optical beams Lb1 and Lb2 collected by the first and second objective lens OL1 and OL2.

Moreover, an angle of the optical axis Lx of the blue optical beams Lb1 and Lb2 with respect to the outlines (periphery) Lo (Lo1 and Lo2) of the blue optical beams Lb1 and Lb2 is referred to as converging angle $\alpha$ (a first converging angle $\alpha1$ and a second converging angle $\alpha2$).

In reality, as shown in FIG. 6B, the focal points Fb1 and Fb2 of the blue optical beams Lb1 and Lb2 are not "points" due to diffraction phenomena. The intersections of the optical axis Lx with a beam waist BW where the diameter of the blue optical beams Lb1 and Lb2 is at a minimum is regarded as focal points Fb1 and Fb2.

By the way, in this embodiment, by making the numerical aperture NA of the objective lens OL2 smaller than the numerical aperture NA of the objective lens OL1, the second converging angle $\alpha2$ becomes smaller than the first converging angle $\alpha1$. However, the present invention is not limited to this. For example, if the numerical aperture NA of the objective lens OL2 is equal to or larger than the numerical aperture NA of the objective lens OL1, the second converging angle $\alpha2$ can be smaller than the first converging angle $\alpha1$ by making the diameter of the blue optical beam Lb2 entering the objective lens OL2 smaller than that of the blue optical beam Lb1.

(2) Configuration of Optical Disc

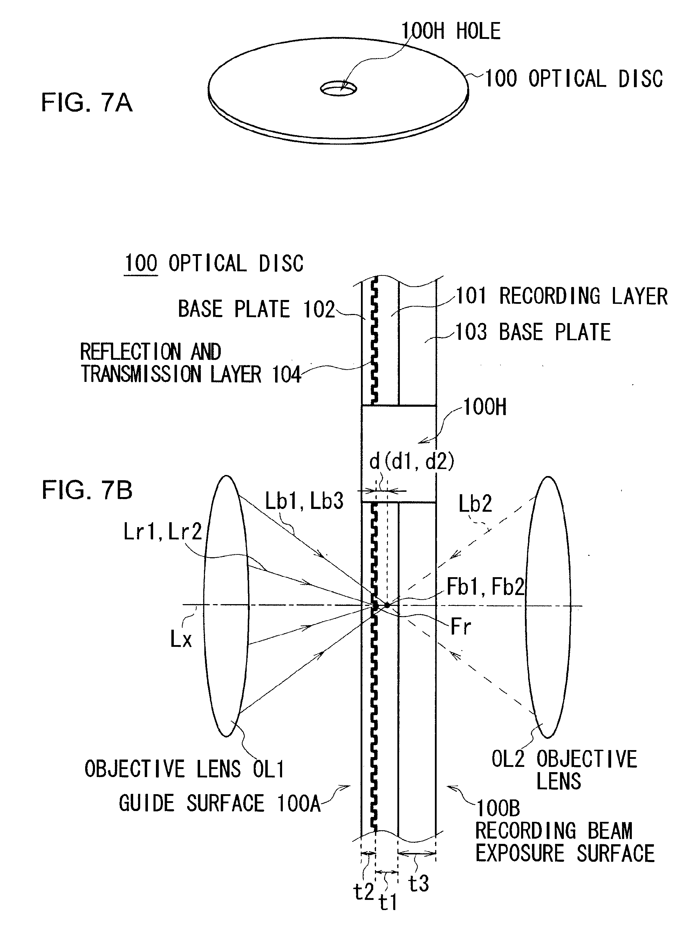

The following describes an optical disc 100 that is used as an information recording medium according to an embodiment of the present invention. FIG. 7A is an external view of the optical disc 100. The optical disc 100 as a whole is a discoid disc whose diameter is around 120 mm, which is the same as typical CD, DVD and BD. A hole 100H is formed at its central portion.

FIG. 7B is a cross sectional view of the optical disc 100. At the center, a recording layer 101 is formed: information is recorded on the recording layer 101. The recording layer 101 is sandwiched between base plates 102 and 103.

The base plates 102 and 103 are made from materials whose transmissivity is high and whose optical anisotropy is small, such as polycarbonate or glass. The base plates 102 and 103 do not change the polarization of optical beams passing therethrough with high transmissivity. The base plates 102 and 103 also serve as protecting the recording layer 101. Incidentally, antireflection coating may be applied to the surfaces of the base plates 102 and 103 to prevent unnecessary reflection.

Like that of the optical disc 8 (FIG. 1), the recording layer 101 is made from photopolymer or the like whose refraction index varies according to the intensity of the emitted beams, and reacts to a blue optical beam with a wavelength of 405 nm. As shown in FIG. 7B, if two relatively strong blue optical beam Lb1 and Lb2 interfere with each other in the recording layer 101, a standing wave occurs in the recording layer 101. Accordingly, as shown in FIG. 2A, an interference pattern having the hologram's characteristics is formed.

Moreover, the optical disc 100 includes a reflection transmission film 104 as a reflection layer: the reflection transmission film 104 is situated at a boundary between the recording layer 101 and the base plate 102. The reflection transmission film 104 is made of dielectric multilayer or the like: it is for example made of a metal film, such as aluminum or silver produced by such methods as sputtering, and an inorganic film including silicon oxide or silicon nitride. Moreover, in order to prevent the reflection transmission film 104 from reacting to the recording layer 101 when being exposed to blue optical beams Lb or red optical beams Lr, a gap layer made from UV curable resin can be formed on the reflection and transmission layer 104.

The reflection and transmission layer 104 has wavelength selectivity: the reflection and transmission layer 104 allows the blue optical beams Lb1, Lb2, and Lb3 (Lb3 is a blue reproduction optical beam) whose wavelength is 405 mm to pass therethrough while reflecting a red optical beam whose wavelength is 660 nm.

Moreover, the reflection and transmission layer 104 includes a guide groove for tracking servo. Specifically, a spiral track is formed by lands and grooves, like typical BD-R (Recordable) discs. In this track, each recording unit is associated with a number or an address, making it possible to identify a track by an address for information recording and reproducing.

Incidentally, on the reflection and transmission layer 104 (or at a boundary between the recording layer 101 and the base plate 102), instead of the guide groove, a pit or the like may be formed; alternatively, the guide groove and the pit may be both used.

If a red optical beam Lr1 is emitted to the reflection and transmission layer 104 via the base plate 102, the reflection and transmission layer 104 reflects it toward the base plate 102. The reflected beam is referred to as "red reflection optical beam Lr2."

It is expected that, in the optical disc device, for example, the red reflection optical beam Lr2 is used for position control of the first objective lens OL1 (i.e. focus control and tracking control): the red reflection optical beam Lr2 is used to adjust a focal point Fr of the red optical beam Lr1 collected by the predetermined first objective lens OL1 so that the focal point Fr is on a target track.

Incidentally, the optical disc 100's surface that is close to the base plate 102 is referred to as "guide surface 100A," while the optical disc 100's surface that is close to the base plate 103 is referred to as "recording beam exposure surface 100B," hereinafter.

Actually, when information is recorded on the optical disc 100, as shown in FIG. 7B, the first objective lens OL1 whose position is controlled collects the red optical beam Lr1, and focuses it on a target track on the reflection and transmission layer 104.

Moreover, the blue optical beam Lb1 that shares the optical axis Lx with the red optical beam Lr1 and is collected by the first objective lens OL1 passes through the base plate 102 and the reflection and transmission layer 104, and is focused on a position right behind the desired track inside the recording layer 101 (this position is close to the base plate 102). At this time, on the shared optical axis Lx, the focal point Fb1 of the blue optical beam Lb1 is farther away from the first objective lens OL1 than the focal point Fr is.

Furthermore, the blue optical beam Lb2 that has the same wavelength as the blue optical beam Lb1 and shares the optical axis Lx is emitted in the opposite direction to the blue optical beam Lb1 (toward the base plate 103) after being collected by the second objective lens OL2 whose numerical aperture NA is smaller than that of the first objective lens OL1. Since the position of the objective lens OL2 is controlled, the focal point Fb2 of the blue optical beam Lb2 is located at the same position as the focal point Fb1 of the blue optical beam Lb1.

At this time, in the recording layer 101, the convergent blue optical beams Lb1 and LB2 overlap each other, and the recording mark RM is formed in close-overlapping area where their intensity becomes more than a predetermined level. As a result, a relatively small interference pattern, or the recording mark RM, is formed at the position of the focal points Fb1 and Fb2, which exist right behind the target track inside the recording layer 101 of the optical disc 100: the size of the recording mark RM is determined based on the numerical aperture NA of the first objective lens OL1.

The recording mark RM, as shown in FIG. 2A, resembles the shape of two cones combined at their bases, and is constricted in the middle (around the cones' bases).

Here, as mentioned above, an optical disc device 20 that emits the blue optical beams Lb1 and Lb2 to the optical disc 100 may need to secure a certain amount of allowance (so-called tilt margin) for an aberration (referred to as "tilt aberration," hereinafter) that occurs when the optical disc 100 is tilted due to the distortion of the optical disc 100 or the vibration of the rotating optical disc 100.

Generally, it is desirable that, if an objective lens whose numerical aperture NA is 0.85 is used, the surface-to-recording distance Dp, a distance from the surface of the base plate 102 to the position of a recording mark should be around 0.1 mm or less.

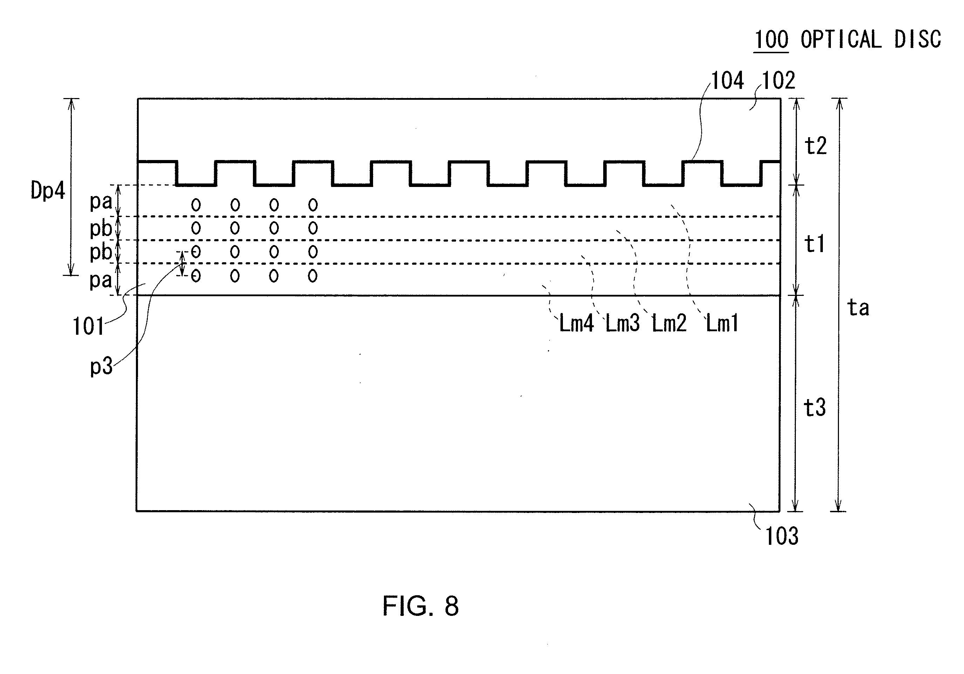

As shown in FIG. 8, in the optical disc 100, recording marks RM are recorded on four imaginary mark recording layers Lm (Lm1 to Lm4). The mark recording layer Lm1 is attached to the reflection and transmission layer 104. The thickness pa of the mark recording layers Lm1 and Lm4 is set at approximately 0.020 mm, while the thickness pb of the mark recording layers Lm2 and Lm3 is set at around 0.015 mm.

Accordingly, if the recording marks RM are recorded in the middle of each mark recording layer Lm, a distance from the position of a recording mark inside the mark recording layer Lm4 to the reflection and transmission layer 104 is about 0.06 mm: the mark recording layer Lm4 is farthest away from the first objective lens OL1.

Accordingly, in the optical disc 100, by making the thickness t2 of the base plate 102 less than 0.04 mm, a surface-to-recording distance Dp4, or a distance from the first objective lens OL1 to the position of a recording mark inside the mark recording layer Lm4, can be around 0.1 mm.

Turning to the thickness t3 of the base plate 103: if the numerical aperture of the second objective lens OL2 is the same as that of the first objective lens OL1, or 0.85, the thickness t3 of the base plate 103 should be set at the same as the thickness t2 of the base plate 102, or 0.04 mm, for similar reasons.

In this case, the total thickness ta of the optical disc 100 becomes very thin, around 0.14 mm, and it is not enough for securing mechanical strength of the optical disc 100.

Accordingly, on the premise that the numerical aperture NA of the second objective lens OL2 is set at less than 0.85, the thickness t3 of the base plate 103 is set at 1.0 mm. Therefore, the total thickness of the optical disc 100 can be set at 1.1 mm, making it possible to secure enough mechanical strength of the optical disc 100. In addition, this allows the optical disc device 20 to use the first objective lens OL1 whose numerical aperture NA is 0.85.

Incidentally, the thickness t2 of the base plate 102 should be as thin as possible to increase the thickness of the recording layer 101, while the first objective lens OL1 that the optical disc device 20 uses should have a large numerical aperture NA: it is desirable that the thickness t2 of the base plate 102 be less than 0.2 mm; less than 0.1 mm is more desirable. On the other hand, to secure enough strength as a protective layer, it is desirable that the thickness t2 is set at more than 0.01mm; more than 0.02 mm is more desirable.

Moreover, it is desirable that the thickness t3 of the base plate 103 be set at more than 0.4 mm to secure enough mechanical strength (rigidity) of the whole optical disc 100; more than 0.7 mm is more desirable. Moreover, if the numerical aperture NA of the second objective lens OL2 that the optical disc device 20 uses is set at too small a value, the beam waist diameter S2 of the blue optical beam Lb2 becomes excessively large, increasing an area that does not constitute the close-overlapping area and leading to an increase in energy loss for the blue optical beam Lb2. Accordingly, it is desirable that the thickness t3 be set at less than 1.5 mm; less than 1.2 mm is more desirable.

Furthermore, the optical disc 100 is designed so that the thickness t1 of the recording layer 101 (0.07 mm) is larger than the height DBh of the recording mark RM (described later). Accordingly, in the optical disc 100, when the recording marks RM are recorded, a distance from where they are recorded to the reflection and transmission layer 104 is changed (this distance is referred to as "depth," hereinafter). As a result, multilayer recording is realized, as if the mark recording layers pile up in the direction of the thickness of the optical disc 100, as shown in FIG. 2B.

In this case, the depth of the focal points Fb1 and Fb2 of the blue optical beams Lb1 and Lb2 is adjusted inside the recording layer 101 of the optical disc 100, thereby controlling the depth of the recording marks RM. For example, in the optical disc 100, considering mutual interference among the recording marks RM and the like, a distance p3 from one mark recording layer to the next mark recording layer may be set at around 15 $\mu$m; this makes it possible to form four mark recording layers inside the recording layer 101. Instead of 15 $\mu$m, the distance p3 may be set at other values if mutual interference among the recording marks RM and the like are taken into consideration.

On the other hand, in the optical disc 100, during a process of reproducing information, like the process of recording the information, the position of the first objective lens OL1 is controlled so that the red optical beam Lr1 that is collected by the first objective lens 38 is focused on a target track on the reflection and transmission layer 104.

Furthermore, the focal point Fb1 of the blue optical beam Lb1 that passes through the first objective lens OL1, the base plate 102 and the reflection and transmission layer 104 is focused on a target mark position that is right behind the target track inside the recording layer 101 and is located at a target depth.

At this time, since the recording mark RM recorded at the position of the focal point Fb1 has hologram's characteristics, a blue reproduction optical beam Lb3 is generated from the recording mark RM recorded at the target mark position. The blue reproduction optical beam Lb3 has almost the same optical characteristics as the blue optical beam Lb2 that is emitted for recording the recording marks RM. The blue reproduction optical beam Lb3 travels in the same direction as the blue optical beam Lb2, i.e. it travels from the recording layer 101 to the base plate 102 while being diverged.

In that manner, in the optical disc 100, during the recording process, the red optical beam Lr1 is used for position control, while the blue optical beams Lb1 and Lb2 are used for information recording. Accordingly, at the position where the focal points Fb1 and Fb2 overlap each other in the recording layer 101, or the target mark position that is right behind the target track inside the reflection and transmission layer 104 and is located at the target depth, the recording mark RM is recorded as the information.

Moreover, in the optical disc 100, during the process of reproducing the recoded information, the red optical beam Lr1 is used for position control, while the blue optical beam Lb1 is used for information reproducing. Accordingly, from the position of the focal point Fb1, or the recording mark RM recorded at the target mark position, the blue reproduction optical beam Lb3 is produced.

(3) Configuration of Optical Disc Device

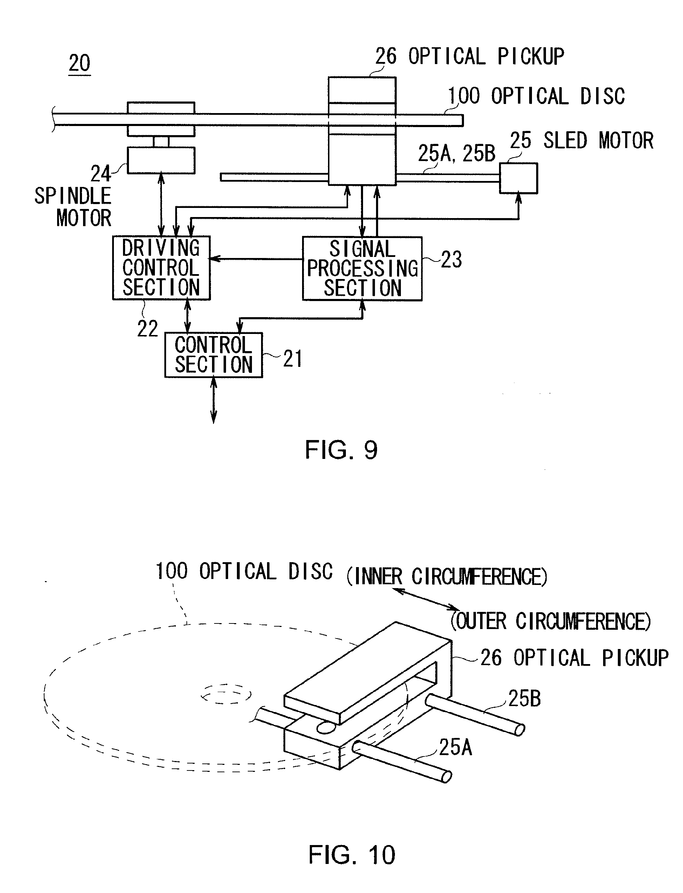

The following describes the optical disc device 20 that supports the above optical disc 100. As shown in FIG. 9, the optical disc device 20 uses a control section 21 to take overall control of the device 20.

The control section 21 includes Central Processing Unit (CPU) (not shown) as a main component. The CPU reads out from Read Only Memory (ROM) (not shown) a basic program, an information recording program, a focal point depth adjustment program, and other programs, and loads them onto Random Access Memory (RAM) (not shown) to perform various processes, including an information recording process.

For example, when receiving from an external device or the like (not shown) an information recording command, a piece of recording information, and a piece of recording address information after the optical disc 100 is put in the device, the control section 21 supplies a driving command and the piece of recording address information to a driving control section 22, and the piece of recording information to a signal processing section 23. Incidentally, the piece of address information is one of the addresses of the recording layer 101 of the optical disc 100: the piece of recording information is recorded on an area corresponding to the address.

The driving control section 22 follows the driving command and controls and drives a spindle motor 24 to rotate the optical disc 100 at a predetermined rotational speed. The driving control section 22 also controls and drives a sled motor 25 to move an optical pickup 26 along traveling shafts 25A and 25B. Accordingly the optical pickup 26 travels in the direction of the diameter of the optical disc 100 (i.e. toward the inner circumference or the outer circumference) and stops at a position corresponding to the piece of recording address information.

The signal processing section 23 performs predetermined coding and modulation processes and the like for the supplied piece of recording information, produces recording signals, and supplies them to the optical pickup 26.

As shown in FIG. 10, the optical pickup 26 is substantially a U-shaped component. As shown in FIG. 7B, the optical pickup 26 emits optical beams to either side of the optical disc 100, and focuses them on the same position.

Under the control of the driving control section 22 (FIG. 9), the optical pickup 26 performs a focus control process and a tracking control process. Therefore, the optical pickup 26 can emit an optical beam to a track (referred to as "target track," hereinafter) corresponding to the piece of address information in the recording layer 101 of the optical disc 100, and records recording marks RM in accordance with the recording signals supplied from the signal processing section 23 (described later).

Moreover, for example, when receiving from an external device (not shown) an information reproduction command, and a piece of reproduction address information that represents an address of the piece of recording information, the control section 21 supplies a driving command to the driving control section 22, and a reproduction process command to the signal processing section 23.

The driving control section 22 controls and drives the spindle motor 24 in a similar way to when recording information, and rotates the optical disc 100 at a predetermined rotational speed. At the same time, the driving control section 22 controls and drives the sled motor 25 to move the optical pickup 26 to a position corresponding to the piece of reproduction address information.

Under the control of the driving control section 22 (FIG. 9), the optical pickup 26 performs the focus control process and the tracking control process, and emits a predetermined intensity of optical beam to a track (i.e. the target track) corresponding to the piece of reproduction address information in the recording layer 101 of the optical disc 100. At the time, the optical pickup 26 detects a reproduction optical beam produced from the recording mark RM of the recording layer 101 of the optical disc 100, and supplies a detection signal that varies according to the intensity of the reproduction optical beam to the signal processing section 23 (described later).

The signal processing section 23 performs predetermined demodulation and decoding processes and other signal processing processes for the supplied detection signals to reproduce reproduction information, and supplies it to the control section 21. The control section 21 then transmits the reproduction information to an external device (not shown).

In this manner, the optical disc device 20 uses the control section 21 to control the optical pickup 26. Accordingly, the optical disc device 20 records information on target tracks in the recording layer 101 of the optical disc 100, and also reproduces information from the target tracks.

(4) Configuration of Optical Pickup

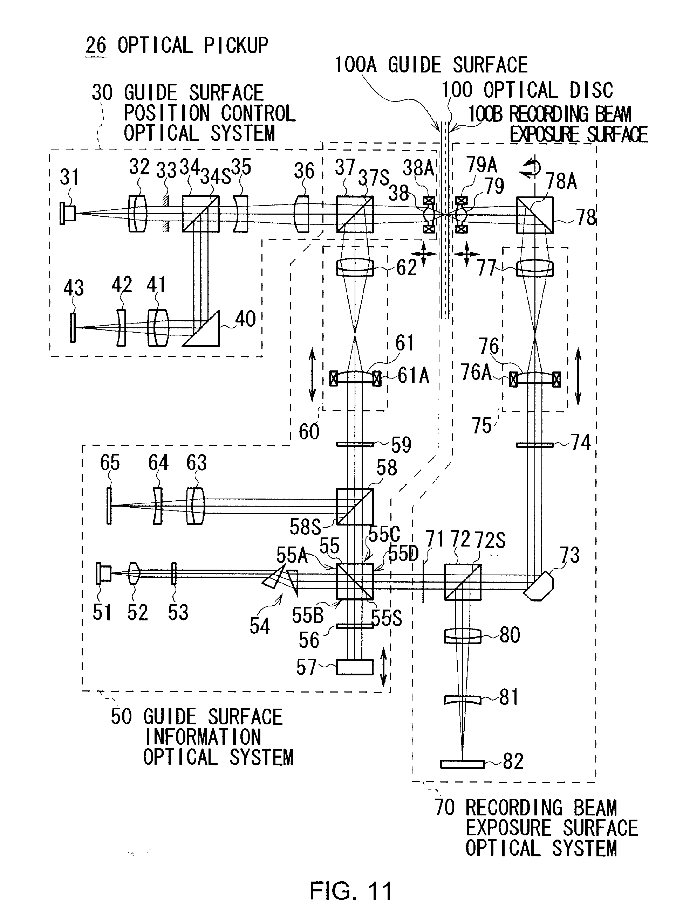

The following describes the configuration of the optical pickup 26. As schematically shown in Fig. 11, the optical pickup 26 includes a number of optical components, which are divided into three groups: a guide surface position control optical system 30, a guide surface information optical system 50, and a recording beam exposure surface optical system 70.

(4-1) Configuration of Guide Surface Position Control Optical System

The guide surface position control optical system 30 emits the red optical beam Lr1 to the guide surface 100A of the optical disc 100, and receives the reflection, or a red reflection optical beam Lr2, from the optical disc 100.

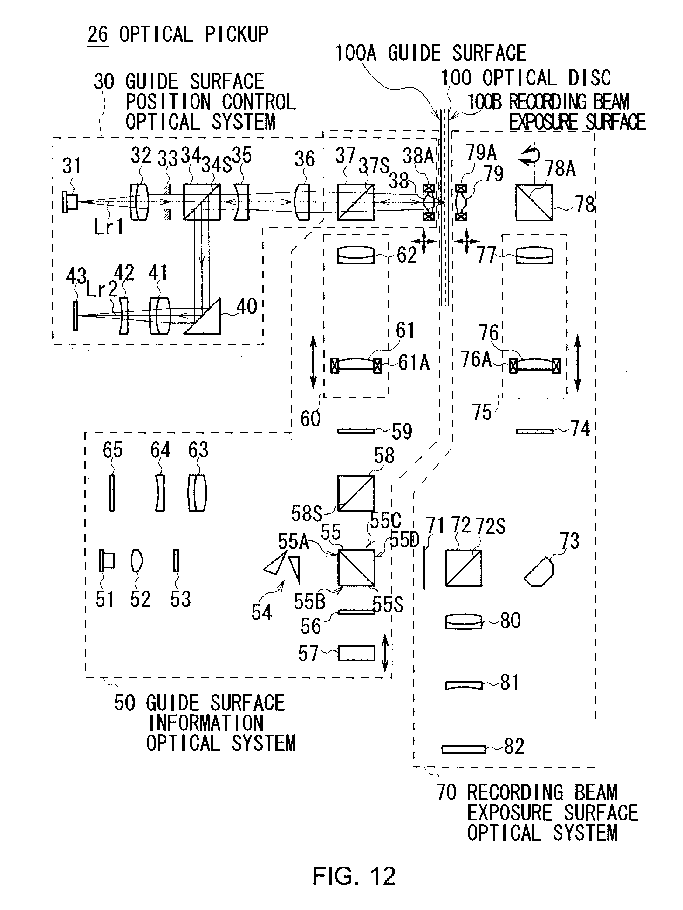

As shown in FIG. 12, a laser diode 31 of the guide surface position control optical system 30 emits a red laser beam whose wavelength is approximately 660 nm. Actually, under the control of the control section 21 (FIG. 9), the laser diode 31 emits a predetermined intensity of red optical beam Lr1 to a collimator lens 32: the red optical beam Lr1 is a diverging beam. The collimator lens 32 collimates the diverging red optical beam Lr1. The collimated red optical beam Lr1 then enters a non-polarizing beam splitter 34 after passing through a slit 33.

The non-polarizing beam splitter 34 allows about 50 percent of the red optical beam Lr1 to pass through a reflection and transmission plane 34A, and leads it to a correcting lens 35. The correcting lens 35 and a correcting lens 36 converge the red optical beam Lr1 after diverging it, and lead it to a dichroic prism 37.

A reflection and transmission plane 37S of the dichroic prism 37 has wavelength selectivity: its transmission and reflection rates vary according to the wavelength of the optical beam. The reflection and transmission plane 37S allows substantially 100 percent of the red optical beam to pass therethrough, while reflecting almost 100 percent of the blue optical beam. Accordingly, the red optical beam Lr1 passes through the reflection and transmission plane 37S of the dichroic prism 37, and then enters the first objective lens 38.

The first objective lens 38 collects the red optical beam Lr1, and emits it to the guide surface 100A of the optical disc 100. At this time, as shown in FIG. 7B, the red optical beam Lr1 passes through the base plate 102, is reflected at the reflection and transmission layer 104, and becomes the red reflection optical beam Lr2 that travels in the opposite direction to the red optical beam Lr1.

Incidentally, during the design phase, the first objective lens 38 is optimized for the blue optical beam Lb1. As for the red optical beam Lr1, due to the optical distance between the slit 33, the correcting lenses 35 and 36 and the like, the first optical lens 38 serves as a condenser lens whose numerical aperture is for example 0.41.

After that, the red reflection optical beam Lr2 passes through the first objective lens 38, the dichroic prism 37, and the correcting lenses 36 and 35, and is collimated before entering the non-polarizing beam splitter 34.

The non-polarizing beam splitter 34 reflects about 50 percent of the red reflection optical beam Lr2 toward a mirror 40. The mirror 40 reflects the red reflection optical beam Lr2 toward a condenser lens 41.

The condenser lens 41 converges the red reflection optical beam Lr2, gives it astigmatism by a cylindrical lens 42, and leads it to a photodetector 43.

By the way, in the optical disc device 20, as for the rotating optical disc 100, the axial run-out and the like could occur, and a relative position of a target track with respect to the guide surface position control optical system 30 could change.

Accordingly, in the guide surface position control optical system 30, in order to let the focal point Fr (FIG. 7B) of the red optical beam Lr1 follow the target track, the focal point Fr should be moved in a focus direction, which is a direction of a line along which something can move close to or away from the optical disc 100, or in a tracking direction, which is a direction of a line connecting a point on the inner circumference of the optical disc 100 and a point on the outer circumference.

Accordingly, the first objective lens 38 can be moved by a two-axis actuator 38A in two-axis directions, i.e. in the focus and tracking directions.

Moreover, in the guide surface position control optical system 30 (FIG. 12), the position of each optical component is optically adjusted so that the in-focus state of the red reflection optical beam Lr2 that reaches the photodetector 43 after being collected by the condenser lens 41 reflects the in-focus state of the red optical beam L1 that reaches the reflection and transmission layer 104 of the optical disc 100 after being collected by the first objective lens 38.

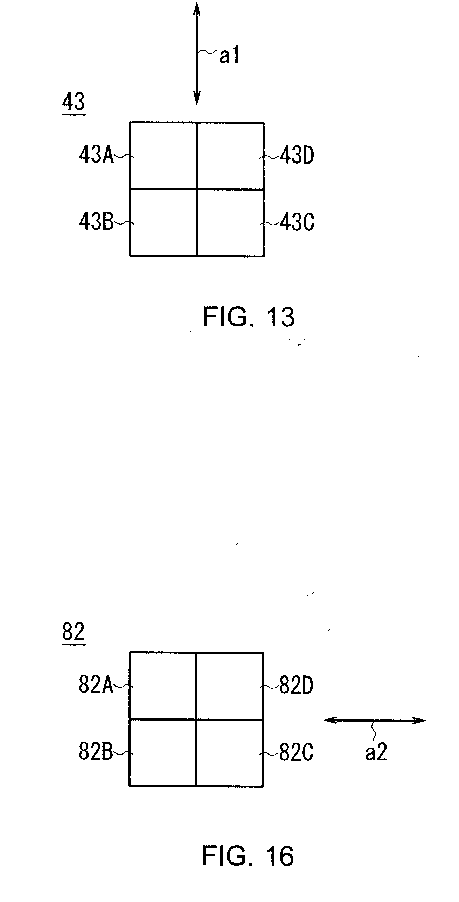

As shown in FIG. 13, the photodetector 43's surface to which the red reflection optical beam Lr2 is emitted is divided in a reticular pattern into four detection areas 43A, 43B, 43C, and 43D. Incidentally, a direction indicated by an arrow a1 (the vertical direction in figures) corresponds to the traveling direction of track when the red optical beam Lr1 is emitted to the reflection and transmission layer 104 (FIG. 7).

Each of the detection areas 43A, 43B, 43C, and 43D of the photodetector 43 detects part of the red reflection optical beam Lr2, generates detection signals SDAr, SDBr, SDCr, and SDDr according to the detected intensity of the beam, and transmits them to the signal processing section 23 (FIG. 9).

The signal processing section 23 is designed to perform a focus control process according to the so-called astigmatism method. Based on the following equation (1), the signal processing section 23 calculates a focus error signal SFEr, and supplies it to the driving control section 22:

$$SFEr = (SDAr + SDCr) - (SDBr + SDDr) \qquad \ldots \ldots (1)$$

This focus error signal SFEr represents a positional difference between the focal point Fr of the red optical beam Lr1 and the reflection and transmission layer 104 of the optical disc 100.

Moreover, the signal processing section 23 performs a tracking control process according to the so-called push-pull method. Based on the following equation (2), the signal processing section 23 calculates a tracking error signal STEr, and supplies it to the driving control section 22.

$$STEr = (SDAr + SDDr) - (SDBr + SDCr) \qquad \ldots \ldots (2)$$

This tracking error signal STEr represents a positional difference between the focal point Fr of the red optical beam Lr1 and the target track on the reflection transmission film 104 of the optical disc 100.

The driving control section 22 generates a focus driving signal SFDr from the focus error signal SFEr, and supplies the focus driving signal SFDr to the two-axis actuator 38A. In this manner, the driving control section 22 performs feedback control (i.e. focus control) for the first objective lens 38, so that the red optical beam Lr1 is focused on the reflection and transmission film 104.

Moreover, the driving control section 22 generates a tracking driving signal STDr from the tracking error signal STEr, and supplies the tracking driving signal STDr to the two-axis actuator 38A. In this manner, the driving control section 22 performs feedback control (i.e. tracking control) for the first objective lens 38, so that the red optical beam Lr1 is focused on the target track on the reflection and transmission film 104 of the optical disc 100.

In this manner, the guide surface position control optical system 30 emits the red optical beam Lr1 to the reflection and transmission layer 104 of the optical disc 100, detects the reflection, or the red reflection optical beam Lr2, and supplies the detected result to the signal processing section 23. In accordance with this, the driving control section 22 performs the focus control and tracking control processes of the first objective lens 38 so that the red optical beam Lr1 is focused on the target track on the reflection and transmission film 104.

(4-2) Configuration of Guide Surface Information Optical System

The guide surface information optical system 50 is designed to emit the blue optical beam Lb1 to the guide surface 100A of the optical disc 100 and to receive the blue optical beam Lb2 and the blue reproduction optical beam Lb3 from the optical disc 100.

(4-2-1) Emission of Blue Optical Beam

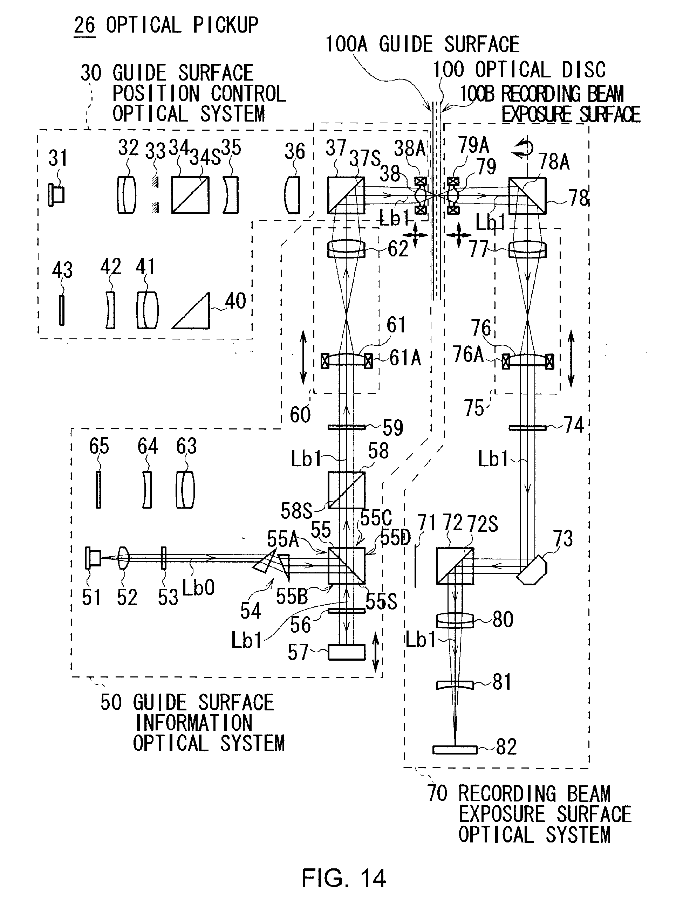

With reference to FIG. 14, a laser diode 51 of the guide surface information optical system 50 is able to emit a blue optical beam whose wavelength is about 405 nm. Actually, under the control of the control section 21 (FIG. 9), the laser diode 51 emits the diverging blue optical beam Lb0 to a collimator lens 52. The collimator lens 52 collimates the blue optical beam Lb0, and leads it to a 1/2 wave plate 53.

At this time, the polarization direction of the blue optical beam Lb0 is rotated through a predetermined angle by the 1/2 wave plate 53. In this manner the ratio of p-polarization to s-polarization is adjusted. Furthermore, after its intensity distribution is formed by an anamorphic prism 54, the blue optical beam Lb0 enters a plane 55A of a polarizing beam splitter 55.

A reflection and transmission plane 55S of the polarizing beam splitter 55 partially transmits and reflects the optical beam: the ratio of transmission to reflection varies according to the polarization direction of the optical beam. For example, the reflection and transmission plane 55S reflects about 50 percent of the p-polarized optical beam and allows the rest of it to pass therethrough; the reflection and transmission plane 55S reflects about 100 percent of the s-polarized optical beam.

Actually, the reflection and transmission plane 55S of the polarizing beam splitter 55 reflects about 50 percent of the p-polarized blue optical beam Lb0, and leads it to a 1/4 wave plate 56 via a plane 55B. And the reflection and transmission plane 55S allows the rest of the blue optical beam Lb0 to pass therethrough, and leads it to a shutter 71 via a plane 55D. The blue optical beam reflected by the reflection and transmission plane 55S is referred to as the "blue optical beam Lb1," while the blue optical beam that has passed through the reflection and transmission plane 55S is referred to as the "blue optical beam Lb2."

The 1/4 wave plate 56 converts the linearly polarized blue optical beam Lb1 into the circularly polarized blue optical beam Lb1, and leads it to a movable mirror 57. The 1/4 wave plate 56 also converts the circularly polarized blue optical beam Lb1 reflected by the movable mirror 57 into the linearly polarized blue optical beam Lb1, and leads it to the plane 55B of the polarizing beam splitter 55.

At this time, the blue optical beam Lb1, for example, is converted by the 1/4 wave plate 56 from p-polarized beam to left-handed circularly polarized beam, and is converted from left-handed circularly polarized beam to right-handed circularly polarized beam when being reflected by the movable mirror 57, and is converted again by the 1/4 wave plate 56 from right-handed circularly polarized beam to s-polarized beam. Accordingly, the polarization direction of the blue optical beam Lb1 that comes out from the plane 55B is different from that of the blue optical beam Lb1 that enters the plane 55B after being reflected by the movable mirror 57.

According to the polarization direction of the blue optical beam Lb1 (s-polarized) that comes in from the plane 55B, the reflection and transmission plane 55S of the polarizing beam splitter 55 allows the whole blue optical beam Lb1 to pass therethrough, and leads it to a polarizing beam splitter 58 via a plane 55C.

In this manner, in the guide surface information optical system 50, an optical path of the blue optical beam Lb1 can be extended by the polarizing beam splitter 55, the 1/4 wave plate 56 and the movable mirror 57.

The reflection and transmission plane 58S of the polarizing beam splitter 58 for example reflects about 100 percent of a p-polarized optical beam and allows about 100 percent of a s-polarized optical beam to pass therethrough. Actually, the reflection and transmission plane 58S of the polarizing beam splitter 58 allows the whole blue optical beam Lb1 to pass therethrough. After being converted by a 1/4 wave plate 59 from linearly polarized beam (s-polarized beam) to circularly polarized beam (right-handed circularly polarized beam), the blue optical beam Lb1 enters a relay lens 60.

The relay lens 60 uses a movable lens 61 to convert the blue optical beam Lb1 from collimated beam to converging beam. After being diverged, the blue optical beam Lb1 is converted by a fixed lens 62 to converging beam again, and enters the dichroic prism 37.

Here, the movable lens 61 can be moved by an actuator 61A in the direction of an optical axis of the blue optical beam Lb1. Actually, under the control of the control section 21 (FIG. 9), the actuator 61A of the relay lens 60 moves the movable lens 61 to change the converging state of the blue optical beam Lb1 emitted from the fixed lens 62.

The reflection and transmission plane 37S of the dichroic prism 37 reflects the blue optical beam Lb1 according to the wavelength of the blue optical beam Lb1, and leads it to the first objective lens 38. Incidentally, the polarization direction of the circularly polarized blue optical beam Lb1 is reversed when being reflected at the reflection and transmission plane 37S, for example from right-handed polarized beam to the left-handed polarized beam.

The first objective lens 38 collects the blue optical beam Lb1 and leads it to the guide surface 100A of the optical disc 100. Incidentally, with respect to the blue optical beam Lb1, the first objective lens 38 serves as a condenser lens with a numerical aperture NA of 0.85, due to an optical distance from the first objective lens 38 to the relay lens 60 and the like.

At this time, as shown in FIG. 7B, the blue optical beam Lb1 passes through the base plate 102 and the reflection and transmission film 104, and is focused on in the recording layer 101. Here, the position of the focal point Fb1 of the blue optical beam Lb1 is determined based on the converging state of the blue optical beam Lb1 emitted from the fixed lens 62 of the relay lens 60. That is, according to the position of the movable lens 61, the focal point Fb1 moves inside the recording layer 101 toward the guide surface 100A or toward the recording beam exposure surface 100B.

Actually, in the guide surface information optical system 50, the position of the movable lens 61 is controlled by the control section 21 (FIG. 9): a depth d1, or a distance from the reflection and transmission film 104 to the focal point Fb1 (FIG. 7B) of the blue optical beam LB1 in the recording layer 101 of the optical disc 100 is adjusted. By the way, the adjustment method of the focal point Fb1 of the blue optical beam Lb1 is described later.

After being focused on the focal point Fb1, the blue optical beam Lb1 is diverged, and passes through the recording layer 101, the base plate 103, and the recording beam exposure surface 100B before entering a second objective lens 79 (described later).

In this manner, in the guide surface information optical system 50, the blue optical beam Lb1 is emitted to the guide surface 100A of the optical disc 100, and the focal point Fb1 of the blue optical beam Lb1 is formed inside the recording layer 101. Moreover, according to the position of the movable lens 61 of the relay lens 60, the depth d1 of the focal point Fb1 is adjusted. (4-2-2) Reception of Blue Optical Beam

By the way, the optical disc 100 allows the blue optical beam Lb2 that is emitted from the second objective lens 79 of the recording beam exposure surface optical system 70 to the recording beam exposure surface 100B to pass therethrough, and emits it as diverging beam from the guide surface 100A (described later). Incidentally, the blue optical beam Lb2 is converted to circularly polarized beam (right-handed circularly polarized beam, for example).

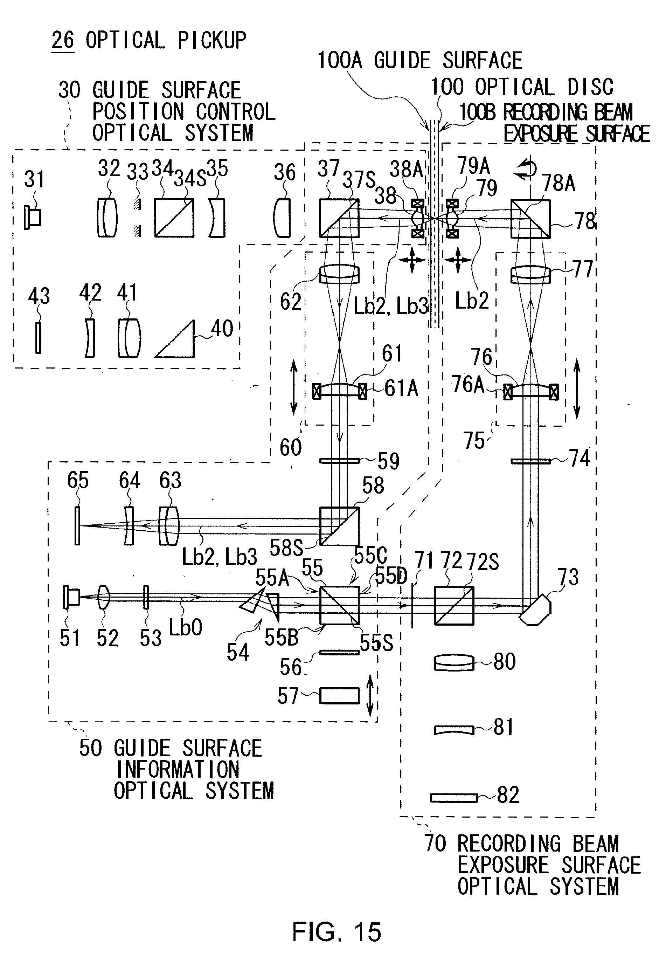

At this time, in the guide surface information optical system 50, as shown in FIG. 15, the blue optical beam Lb2 is converged by the first objective lens 38 to some extent, and is reflected by the dichroic prism 37 before entering the relay lens 60. Incidentally, the polarization direction of the circularly polarized blue optical beam Lb2 is reversed when being reflected at the reflection and transmission plane 37S, for example from right-handed polarized beam to the left-handed polarized beam.

Subsequently, the blue optical beam Lb2 is converted by the fixed lens 62 and movable lens 61 of the relay lens 60 to collimated beam. After being converted by the 1/4 wave plate 59 from circularly polarized beam (left-handed circularly polarized beam) to linearly polarized beam (p-polarized beam), the blue optical beam Lb2 enters the polarizing beam splitter 58.

The polarizing beam splitter 58 reflects the blue optical beam Lb2 according to the polarization direction of the blue optical beam Lb2, and leads it to a condenser lens 63. The condenser lens 63 collects the blue optical beam Lb2, and leads it to a photodetector 65 via a cylindrical lens 64 that gives the blue optical beam Lb2 astigmatism.

Incidentally, each optical component of the guide surface information optical system 50 is arranged so that the blue optical beam Lb2 is focused on the photodetector 65.

The photodetector 65 detects the intensity of the blue optical beam Lb2, generates a reproduction detection signal SDp according to the detected intensity, and supplies it to the signal processing section 23 (FIG. 9).

However, the reproduction detection signal SDp that is generated by the photodetector 65 according to the intensity of the blue optical beam Lb2 may not be used. Accordingly, even if the reproduction detection signal SDp is supplied, the signal processing section 23 (FIG. 9) does not perform any signal processing process.

On the other hand, as mentioned above, if the recording mark RM is recorded on the recording layer 101 of the optical disc 100, the recording mark RM serves as a hologram and therefore generates a blue reproduction optical beam Lb3 after the focal point Fb1 of the blue optical beam Lb1 strikes the recording mark RM.

Because of the characteristics of holograms, the blue reproduction optical beam Lb3 is equivalent to an optical beam that is emitted, along with the blue optical beam Lb1, for recording the recording mark RM, i.e. the blue optical beam Lb2. Accordingly, in the guide surface information optical system 50, the blue reflection optical beam Lb3 travels along the same path as the blue optical beam Lb2, and finally reaches the photodetector 65.

Here, as mentioned above, each optical component of the guide surface information optical system 50 is arranged so that the blue optical beam Lb2 is focused on the photodetector 65. Accordingly, like the blue optical beam Lb2, the blue reproduction optical beam Lb3 is focused on the photodetector 65.

The photodetector 65 detects the intensity of the blue optical beam Lb3, generates a reproduction detection signal SDp according to the detected intensity, and supplies it to the signal processing section 23 (FIG. 9).

In this case, the reproduction detection signal SDp represents information recorded on the optical disc 100. Accordingly, the signal processing section 23 performs predetermined demodulation and decoding processes and other processes to the reproduction detection signals SDp to generate reproduction information, and supplies the reproduction information to the control section 21.

In this manner, the guide surface information optical system 50 receives the blue optical beam Lb2 or blue reproduction optical beam Lb3 that travels from the guide surface 100A of the optical disc 100 to the first objective lens 38, and supplies the result of reception to the signal processing section 23.

(4-3) Configuration of Recording Beam Exposure Surface Optical System

The recording beam exposure surface optical system 70 (FIG. 11) is designed to emit the blue optical beam Lb2 to the recording beam exposure surface 100B of the optical disc 100, and also receives the blue optical beam Lb1 that is emitted from the guide surface information optical system 50 and passes through the optical disc 100.

(4-3-1) Emission of Blue Optical Beam

With reference to FIG. 15, in the guide surface information optical system 50, as mentioned above, the reflection and transmission plane 55S of the polarizing beam splitter 55 allows about 50 percent of the p-polarized blue optical beam Lb0 to pass therethrough, and leads it to the shutter 71 via the plane 55D.

Under the control of the control section 21 (FIG. 9), the shutter 71 either blocks the blue optical beam Lb2 or allows it to pass therethrough. If the shutter 71 allows the blue optical beam Lb2 to pass therethrough, the blue optical beam Lb2 enters a polarizing beam splitter 72.

Incidentally, the shutter 71 is a mechanical shutter, which mechanically controls a shutter plate (which blocks the blue optical beam Lb2) to either block the blue optical beam Lb2 or allow it to pass therethrough, a liquid crystal shutter, which applies different voltage to a liquid crystal panel to either block the blue optical beam Lb2 or allow it to pass therethrough, or the like.

The reflection and transmission plane 72S of the polarizing beam splitter 72 for example allows about 100 percent of a p-polarized optical beam to pass therethrough and reflects about 100 percent of a s-polarized optical beam. Actually, the polarizing beam splitter 72 allows the whole p-polarized blue optical beam Lb2 to pass therethrough. After that, the blue optical beam Lb2 is reflected by a mirror 73, and is converted by a 1/4 wave plate 74 from linearly polarized beam (p-polarized beam) to circularly polarized beam (left-handed circularly polarized beam) before entering a relay lens 75.

The relay lens 75 has the same structure as the relay lens 60. The relay lens 75 includes a movable lens 76, an actuator 76A, and a fixed lens 77, which correspond to the movable lens 61, the actuator 61A, and the fixed lens 62, respectively.

The movable lens 76 of the relay lens 75 converts the blue optical beam Lb2 from collimated beam to converging beam. After being diverged, the blue optical beam Lb2 is converged by the fixed lens 77 again, and enters a galvanometer mirror 78.

Moreover, like the relay lens 60, under the control of the control section 21 (FIG. 9), the actuator 76A of the relay lens 75 moves the movable lens 76 to change the converging state of the blue optical beam Lb2 emitted from the fixed lens 77.

The galvanometer mirror 78 reflects the blue optical beam Lb2, and leads it to the second objective lens 79. Incidentally, the polarization direction of the circularly polarized blue optical beam Lb2 is reversed when being reflected, for example from left-handed circularly polarized beam to right-handed circularly polarized beam.

Moreover, the galvanometer mirror 78 can change the angle of a reflection plane 78A. Under the control of the control section 21 (FIG. 9), the galvanometer mirror 78 adjusts the angle of the reflection plane 78A to adjust the traveling direction of the blue optical beam Lb2.

The second objective lens 79 and the two-axis actuator 79A are formed as one unit. Like the first objective lens 38, the second objective lens 79 is moved by the two-axis actuator 79A in the focus direction, which is a direction of a line along which something can move close to or away from the optical disc 100, or in the tracking direction, which is a direction of a line connecting a point on the inner circumference of the optical disc 100 and a point on the outer circumference.

The second objective lens 79 collects the blue optical beam Lb2, and emits it to the recording beam exposure surface 100B of the optical disc 100. Incidentally, with respect to the blue optical beam Lb1, the second objective lens 79 serves as a condenser lens whose numerical aperture NA is 0.55, due to an optical distance from the second objective lens 79 to the relay lens 60 and the like.

At this time, as shown in FIG. 7B, the blue optical beam Lb2 passes through the base plate 103, and is focused on in the recording layer 101. Here, the position of the focal point Fb2 of the blue optical beam Lb2 is determined based on the converging state of the blue optical beam Lb2 emitted from the fixed lens 77 of the relay lens 75. That is, like the focal point Fb1 of the blue optical beam Lb1, the focal point Fb2 moves inside the recording layer 101 toward the guide surface 100A or toward the recording beam exposure surface 100B according to the position of the movable lens 76.

Specifically, like the guide surface information optical system 50, the recording beam exposure surface optical system 70 is designed so that the travel distance of the movable lens 76 is substantially in proportion to the travel distance of the focal point Fb2 of the blue optical beam Lb2. For example, if the movable lens 76 moves 1 mm, the focal point Fb2 of the blue optical beam Lb2 moves 30 $\mu$m.

Actually, in the recording beam exposure surface optical system 70, the position of the movable lens 76 of the relay lens 75, along with the movable lens 61 of the relay lens 60, is controlled by the control section 21 (FIG. 9). Accordingly, a depth d2 of the focal point Fb2 (FIG. 7B) of the blue optical beam Lb2 is adjusted in the recording layer 101 of the optical disc 100.

At this time, in the optical disc device 20, the control section 21 (FIG. 9) assumes that the axial run-out of the optical disc 100 and the like do not occur (i.e. in an ideal state), and moves the focal point Fb2 of the blue optical beam Lb2 to put the focal point Fb2 on the focal point Fb1 of the blue optical beam Lb1 when the first and second objective lens 38 and 79 are both located at their reference positions.

After being focused as the focal point Fb2, the blue optical beam Lb2 is diverged when passing through the recording layer 101, the reflection and transmission film 104 and the base plate 102, and enters the first objective lens 38 after coming out from the guide surface 100A.

In this manner, the recording beam exposure surface optical system 70 emits the blue optical beam Lb2 to the recording beam exposure surface 100B of the optical disc 100 and forms the focal point Fb2 of the blue optical beam Lb2 inside the recording layer 101. Moreover, according to the position of the movable lens 76 of the relay lens 75, the depth d2 of the focal point Fb2 is adjusted.

(4-3-2) Reception of Blue Optical Beam

By the way, as mentioned above, the blue optical beam Lb1 that is emitted from the first objective lens 38 of the guide surface information optical system 50 (FIG. 14) is converged inside the recording layer 101 of the optical disc 100, and then enters the second objective lens 79 after being diverged.

At this time, in the recording beam exposure surface optical system 70, the blue optical beam Lb1 is converged by the second objective lens 79 to some extent, and enters the relay lens 75 after being reflected by the galvanometer mirror 78. Incidentally, the polarization direction of the circularly polarized blue optical beam Lb1 is reversed when being reflected by the reflection plane 78A, for example from left-handed circularly polarized beam to right-handed circularly polarized beam.

Subsequently, the blue optical beam Lb1 is collimated by the fixed lens 77 and movable lens 76 of the relay lens 75, and converted by the 1/4 wave plate 74 from circularly polarized beam (right-handed circularly polarized beam) to linearly polarized beam (s-polarized beam). After that the blue optical beam Lb1 is reflected by the mirror 73 before entering the polarizing beam splitter 72.

The polarizing beam splitter 72 reflects the blue optical beam Lb1 according to the polarization direction of the blue optical beam Lb1, and leads it to a condenser lens 80. The condenser lens 80 converges the blue optical beam Lb1, and emits it to a photodetector 82 via a cylindrical lens 81 that gives the blue optical beam Lb1 astigmatism.

However, in reality, the axial run-out of the optical disc 100 could occur. Accordingly, as mentioned above, the guide surface position control optical system 30, the driving control section 22 (FIG. 9) and the like perform the focus and tracking control processes of the first objective lens 38.

At this time, the focal point Fb1 of the blue optical beam Lb1 moves according to the movement of the first objective lens 38, and therefore moves away from the position where the focal point Fb2 of the blue optical beam Lb2 is located when the second objective lens 79 is at its reference position.

Accordingly, in the recording beam exposure surface optical system 70, the optical position of each optical component is adjusted so that the emission state of the blue optical beam Lb1 that is collected by the condenser lens 80 and is emitted to the photodetector 82 reflects a positional difference between the focal point Fb1 of the blue optical beam Lb1 and the focal point Fb2 of the blue optical beam Lb2 in the recording layer 101.

As shown in FIG. 16, like the photodetector 43, the photodetector 82's surface to which the blue reflection optical beam Lb1 is emitted is divided in a reticular pattern into four detection areas 82A, 82B, 82C, and 82D. Incidentally, a direction indicated by an arrow a2 (the horizontal direction in figures) corresponds to the traveling direction of track on the reflection and transmission layer 104 (FIG. 7) when the blue optical beam Lb1 is emitted.

Each of the detection areas 82A, 82B, 82C, and 82D of the photodetector 82 detects part of the blue optical beam Lb1, generates detection signals SDAb, SDBb, SDCb, and SDDb according to the detected intensity of the beam, and transmits them to the signal processing section 23 (FIG. 9).

The signal processing section 23 is designed to perform a focus control process according to the so-called astigmatism method. Based on the following equation (3), the signal processing section 23 calculates a focus error signal SFEb, and supplies it to the driving control section 22:

$$SFEb = (SDAb + SDCb) - (SDBb + SDDb) \qquad \dots \dots (3)$$

This focus error signal SFEb represents a positional difference between the focal point Fb1 of the blue optical beam Lb1 and the focal point Fb2 of the blue optical beam Lb2 in the focus direction.

Moreover, the signal processing section 23 performs a tracking control process using the so-called push-pull signal. Based on the following equation (4), the signal processing section 23 calculates a tracking error signal STEb, and supplies it to the driving control section 22.

$$STEb = (SDAb + SDBb) - (SDCb + SDDb) \qquad \dots \dots (4)$$

This tracking error signal STEb represents a positional difference between the focal point Fb1 of the blue optical beam Lb1 and the focal point Fb2 of the blue optical beam Lb2 in the tracking direction.

Moreover, the signal processing section 23 also generates a tangential error signal for tangential control. This tangential control is a control process of moving the focal point Fb2 of the blue optical beam Lb2 along the tangential direction (or the direction tangential to the track) to the target position.

Specifically, the signal processing section 23 performs a tangential control process using a push-pull signal. Based on the following equation (5), the signal processing section 23 calculates a tangential error signal SNEb, and supplies it to the driving control section 22.

$$SNEb = (SDAb + SDDb) - (SDBb + SDCb) \qquad \dots \dots (5)$$

The tangential error signal SNEb represents a positional difference between the focal point Fb1 of the blue optical beam Lb1 and the focal point Fb2 of the blue optical beam Lb2 in the tangential direction.

The driving control section 22 generates a focus driving signal SFDb from the focus error signal SFEb, and supplies it to the two-axis actuator 79A. Accordingly, focus control is performed for the second objective lens 79 to reduce the positional difference between the focal point Fb1 of the blue optical beam Lb1 and the focal point Fb2 of the blue optical beam Lb2 in the focus direction.

Moreover, the driving control section 22 generates a tracking driving signal STDb from the tracking error signal STEb, and supplies it to the two-axis actuator 79A. Accordingly, tracking control is performed for the second objective lens 79 to reduce the positional difference between the focal point Fb1 of the blue optical beam Lb1 and the focal point Fb2 of the blue optical beam Lb2 in the tracking direction.

Furthermore, the driving control section 22 generates a tangential driving signal SNDb from the tangential error signal SNEb, and supplies it to the galvanometer mirror 78. Accordingly, tangential control is performed to adjust the angle of the reflection plane 78A of the galvanometer mirror 78, so that the positional difference between the focal point Fb1 of the blue optical beam Lb1 and the focal point Fb2 of the blue optical beam Lb2 is reduced in the tangential direction.

In this manner, the recording beam exposure surface optical system 70 receives the blue optical beam Lb1 that travels from the recording beam exposure surface 100B of the optical disc 100 to the second objective lens 79, and supplies the result of reception to the signal processing section 23. In response, the driving control section 22 performs the focus and tracking control processes of the second objective lens 79 and the tangential control process of the galvanometer mirror 78 so that the focal point Fb2 of the blue optical beam Lb2 is moved onto the focal point Fb1 of the blue optical beam Lb1.

(4-4) Adjustment of Optical Path Length

By the way, as mentioned above, when recording information, the optical pickup 26 of the optical disc 20 divides the blue optical beam Lb0 into the blue optical beams Lb1 and Lb2 using the polarizing beam splitter 55 (FIG. 14), and causes the blue optical beams Lb1 and Lb2 to interfere with one another inside the recording layer 101 of the optical disc 100 to record the recording mark RM at the target mark position in the recording layer 101.

Considering the general forming condition of holograms, the coherent length of the blue optical beam Lb0 emitted from the laser diode 51 should be equal to or greater than the size of a hologram in order to correctly record the recording mark RM, or a hologram, on the recording layer 101 of the optical disc 100.

In reality, like typical laser diodes, the laser diode 51's coherent length is equivalent to a value calculated by multiplying the length of a resonator (not shown) inside the laser diode 51 by the refraction index of the resonator: approximately between 100 $\mu$m and 1 mm.

On the other hand, in the optical pickup 26, the blue optical beam Lb1 travels along an optical path inside the guide surface information optical system 50 (FIG. 14), and reaches the guide surface 100A of the optical disc 100; the blue optical beam Lb2 travels along an optical path inside the recording beam exposure surface optical system 70 (FIG. 15), and reaches the recording beam exposure surface 100B of the optical disc 100. That is, in the optical pickup 26, the optical path of the blue optical beam Lb1 is different from that of the blue optical beam Lb2; the length of the optical path of the blue optical beam Lb1 is different from that of the optical path of the blue optical beam Lb2 (each of the optical paths extends from the laser diode 51 to the target mark position, in this case).

Moreover, as mentioned above, in the optical pickup 26, the positions of the movable lenses 61 and 76 of the relay lenses 60 and 75 are adjusted to change the depth (target depth) of the target mark position inside the recording layer 101 of the optical disc 100. At this time, the optical pickup 26 changes the length of the optical paths of the blue optical beams Lb1 and Lb2 by changing the depth of the target mark position.

However, considering the general forming condition of holograms, in the optical pickup 26, the difference in length between the optical paths of the blue optical beams Lb1 and Lb2 should be equal to less than the coherent length (which is approximately 100 $\mu$m and 1 mm) in order to form an interference pattern.

Accordingly, the control section 21 (FIG. 9) controls the position of the movable mirror 57 to adjust the length of the optical path of the blue optical beam Lb1. In this case, the control section 21 makes use of the relationship between the position of the movable lens 61 of the relay lens 60 and the depth of the target mark position to move the movable mirror 57 according to the position of the movable lens 61. In this manner, the length of the optical path of the blue optical beam Lb1 can be changed.

As a result, the optical pickup 26 can limit the difference in length between the optical paths of the blue optical beams Lb1 and Lb2 to less than the coherent length, making it possible to record appropriate recording marks RM, or holograms, at the target positions inside the recording layer 101.

In this manner, the control section 21 of the optical disc device 20 controls the position of the movable mirror 57 to limit the difference in length between the optical paths of the blue optical beams Lb1 and Lb2 to less than the coherent length in the optical pickup 26, making it possible to record appropriate recording marks RM at the target mark positions inside the recording layer 101.

(5) Recording and Reproducing of Information

(5-1) Recording Information on Optical Disc

The following describes how to record information on the optical disc 100. As mentioned above, when receiving from an external device and the like (not shown) a information recording command, a piece of recording information and a piece of recording address information, the control section 21 (FIG. 9) of the optical disc device 20 supplies a driving command and the piece of recording address information to the driving control section 22, and the piece of recording information to the signal processing section 23.

At this time, the driving control section 22 emits the red optical beam Lr1 to the guide surface 100A of the optical disc 100 using the guide surface position control optical system 30 (FIG. 12) of the optical pickup 26, and based on the result of detecting the reflection, or the red reflection optical beam Lr2, performs the focus and tracking control processes of the first objective lens 38 (i.e. position control) to let the focal point Fr of the red optical beam Lr1 follow the target track corresponding to the piece of recording address information.

Moreover, the control section 21 emits the blue optical beam Lb1 to the guide surface 100A of the optical disc 100 using the guide surface information optical system 50 (FIG. 14). At this time, since it is collected by the first objective lens 38 whose position is under control, the focal point Fb1 of the optical beam Lb1 is positioned right behind the target track.

Furthermore, the control section 21 controls the position of the movable lens 61 of the relay lens 60 so that the depth d1 of the focal point Fb1 (FIG. 7B) becomes equal to the target depth. As a result, the focal point Fb1 of the blue optical beam Lb1 strikes the target mark position.

On the other hand, the control section 21 controls the shutter 71 of the recording beam exposure surface optical system 70 (FIG. 15) to allow the blue optical beam Lb2 to pass therethrough, leading the blue optical beam Lb2 to the recording beam exposure surface 100B of the optical disc 100.

The control section 21 also controls the position of the movable lens 76 of the relay lens 75 according to the position of the movable lens 61 of the relay lens 60 to adjust the depth d2 of the blue optical beam Lb2 (FIG. 7B). Accordingly, the depth d2 of the focal point Fb2 of the blue optical beam Lb2 becomes equal to the dept d1 of the focal point Fb1 of the blue optical beam Lb1: the depth d1, in this case, is determined on the premise that the axial run-out of the optical disc 100 does not occur.

Moreover, the control section 21 lets the recording beam exposure surface optical system 70 detect the blue optical beam Lb1 that has passed through the first and second objective lenses 38 and 79. Based on the result of detection, the control section 21 lets the driving control section 22 perform the focus and tracking control processes (position control) of the second objective lens 79 and the tangential control process of the galvanometer mirror 78.

As a result, the focal point Fb2 of the blue optical beam Lb2 strikes the position of the focal point Fb1 of the blue optical beam Lb1, or the target mark position.

Furthermore, the control section 21 adjusts the position of the movable mirror 57 according to the position of the movable lens 61 of the relay lens 60 to limit the difference in length between the optical paths of the blue optical beams Lb1 and Lb2 to less than the coherent length.

Therefore, the control section 21 of the optical disc device 20 can form appropriate recording marks RM at the target mark positions inside the recording layer 101 of the optical disc 100.

By the way, the signal processing section 23 (FIG. 9) for example produces recording signals representing binary data of values "0" and "1" from the piece of recording information supplied from an external device or the like (not shown). Based on these signals, for example, the laser diode 51 emits the blue optical beam Lb0 when the recording signal represents the value of "1"; the laser diode 51 does not emit the blue optical beam Lb0 when the recording signal represents the value of "0."

Accordingly, in the optical disc device 20, when the recording signal represents the value of "1", the recording mark RM is formed at the recording mark position inside the recording layer 101 of the optical disc 100; when the recording signal represents the value of "0", the recording mark RM is not formed at the recording mark position. In this manner, the recording signal's value "1" or "0" is recorded on the target position mark depending on whether the recording mark RM exists or not. Accordingly, the piece of recording information is recorded on the recording layer 101 of the optical disc 100.

(5-2) Reducing Load Required For Tracking Control

By the way, the optical disc device 20 drives the first objective lens 38 so that the blue optical beam Lb1 is emitted to the target track whose position is determined with respect to the groove formed on the reflection and transmission layer 104, as mentioned above. On the other hand, the optical disc device 20 performs the tracking control process by driving the second objective lens 79 to let the optical axis Lx2 of the blue optical beam Lb2 follow the optical axis Lx1 of the blue optical beam Lb1, and emits the blue optical beams Lb1 and Lb2 to the target track.

If the beam waist diameter S1 was equal to the beam waist diameter S2, the optical disc device 20 should have ensured that the optical axis Lx1 is precisely coincident with the optical axis Lx2 to form the recording mark RM whose diameter is equal to the beam waist diameter S1.

On the other hand, the optical disc device 20 is able to enlarge the beam waist diameter S2 so that the beam waist diameter S1 is larger than the beam waist diameter S1. Accordingly, even if the optical axis Lx1 is not precisely coincident with the optical axis Lx2, the optical disc device 20 can make the focal-point-close areas Af1 and Af2 overlap each other.

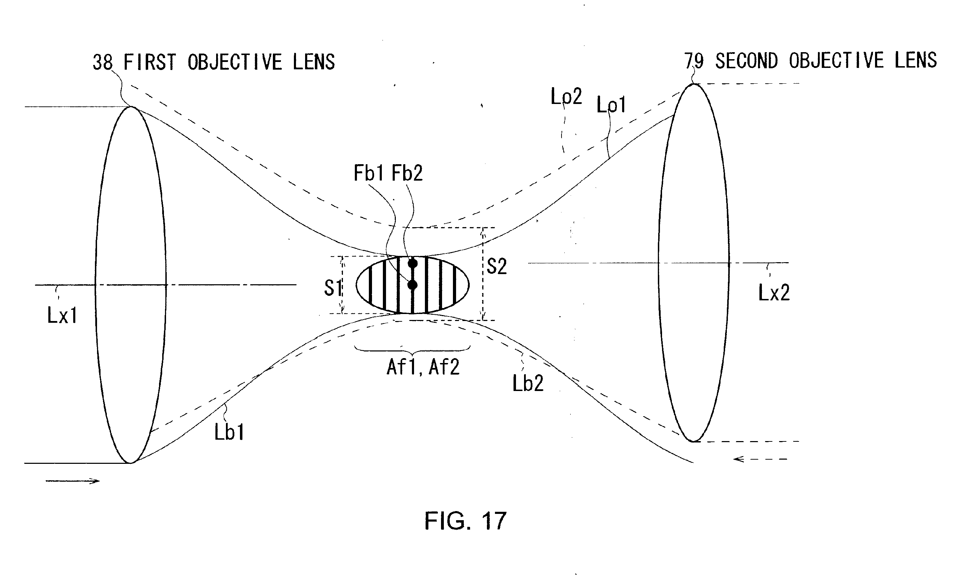

For example, as shown in FIG. 17, even if the optical axis Lx1 of the blue optical beam Lb1 is not precisely coincident with the optical axis Lx2 of the blue optical beam Lb2, the focal-point-close area Af1 can be regarded as the close-overlapping area, as long as the blue optical beam Lb2's outline portion Lo2 stays inside the blue optical beam Lb1's outline portion Lo1 around the focal-point-close area Af2. Accordingly, it is ensured that the recording mark RM whose diameter is equal to the beam waist diameter S1 is formed.

That is, even if the blue optical beam Lb2 controlled by the second objective lens 79 cannot follow the movement of the blue optical beam Lb1, the optical disc device 20 can form an interfering beam by overlapping the focal-point-close areas Af1 and Af2 as long as the blue optical beam Lb2's outline portion Lo2 stays inside the blue optical beam Lb1's outline portion Lo1, because the beam waist diameter S2 is large.

Accordingly, the optical disc device 20 can form the recording marks RM at the target mark positions by driving the first objective lens 38. And the optical disc device 20 can form the recording mark RM whose diameter is equal to the beam waist diameter S1 on the recording layer 101.

Since the beam waist diameter S1 is two-thirds of the beam waist diameter S2, the dimension of the beam around the focal-point-close area Af1 is approximately four-ninths ($2^2/3^2$) of that of the focal-point-close area Af2.

Given the above fact, the optical disc device 20 performs an adjustment process so that the intensity of the blue optical beam Lb1 entering the first objective lens 38 (referred to as "first objective lens incident intensity PW1") is approximately four-ninths of the intensity of the blue optical beam Lb2 entering the second objective lens 79 (referred to as "second objective lens incident intensity PW2"). Accordingly, the per-unit-area intensity (i.e. light intensity and density) of the blue optical beam Lb1 around the focal-point-close area Af1 is almost the same as that of the blue optical beam Lb2 around the focal-point-close area Af2, improving the characteristics of interference. Accordingly, a clear hologram can be formed as the recording mark RM.

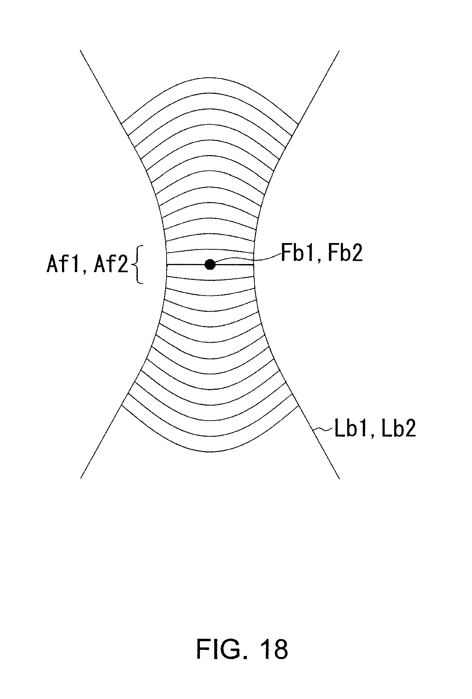

Here, as shown in FIG. 18, the wavefronts of the blue optical beams Lb1 and Lb2 are almost flat around the focal-point-close areas Af1 and Af2. However, as they move away from the focal points Fb1 and Fb2, their wavefronts are curved. These wavefronts affect the holograms formed in the close-overlapping area: if the wavefronts are flat, the flat stripes are recorded as the recording mark RM, and if the wavefronts are curved, the curved stripes are recorded as the recording mark RM.

Incidentally, the diameter of the blue optical beam Lb1 is actually different from that of the blue optical beam Lb2. However, for ease of explanation, they appear the same in figures.

The optical disc device 20 adjusts the converging state of the blue optical beams Lb1 and Lb2 using the relay lens 60 and 75, and places the focal points Fb1 and Fb2 at the target depth to make the focal-point-close areas Af1 and Af2 of the blue optical beams Lb1 and Lb2 overlap each other. Accordingly, the recording mark RM having flat stripes can be formed on the recording layer 101.

Accordingly, during a reproduction process, in the optical disc device 20, the recording mark RM having a flat-stripe hologram reflects the blue optical beam Lb1. Therefore, the appropriate blue reproduction optical beam Lb3 is produced.

Specifically, in the optical disc device 20, thanks to the adjustment of the 1/2 wave plate 53 regarding the ratio of p-polarized beam to s-polarized beam and the separation by the beam splitter 55 into p-polarized and s-polarized beam, about 44 percent of the blue optical beam Lb0 enters the 1/4 wave plate 56 of the guide surface information optical system 50 as the blue optical beam Lb1, while the remaining about 66 percent of it enters the recording beam exposure surface optical system 70 as the blue optical beam Lb2.

The recording beam exposure surface optical system 70 of the optical disc device 20 leads the blue optical beam Lb2, which was separated as s-polarized beam, to the second objective lens 79 while maintaining the intensity of the blue optical beam Lb2.

Accordingly, in the optical disc device 20, the first objective lens incident intensity PW1 becomes about four-ninths of the second objective lens incident intensity PW2, and therefore the light intensity and density of the focal-point-close area Af1 is substantially the same as that of the focal-point-close area Af2.

Moreover, during the reproduction process to the optical disc 100, the optical disc device 20 emits the blue optical beam Lb1 to the optical disc 100 via the first objective lens 38 (FIG. 16), and the photodetector 65 receives the reflection from the optical disc 100 as the blue reproduction optical beam Lb3.

In this case, in the optical disc device 20, compared to when the blue optical beam Lb2 is emitted via the second objective lens 79, the beam waist diameter S1 is smaller than the beam waist diameter S2. This can reduce so-called crosstalk, or the reflection of the blue optical beam Lb1 by recording marks RM adjacent to the target mark position. As a result, the distance between the recording marks RM can be reduced, increasing the recording density.

In this manner, in the optical disc device 20, the beam waist diameter S2 is larger than the beam waist diameter S1 of the blue optical beam Lb1. Accordingly, the recording mark RM can be formed even if the optical axis Lx1 of the blue optical beam Lb1 is not precisely coincident with the optical axis Lx2 of the blue optical beam Lb2. This can reduce the load required for the tracking control process that lets the optical axis Lx1 of the blue optical beam Lb1 follow the optical axis Lx2 of the blue optical beam Lb2.

Incidentally, it is desirable that the numerical aperture NA of the first objective lens 38 is equal to or greater than 0.7 to reduce the size of the recording mark RM and to increase the recording density. Moreover, if the numerical aperture NA of the first objective lens 39 is too large, the thickness t1 of the recording layer 101 and the thickness t2 of the base plate 102 may need to be made thin for tilt margins, making it difficult to secure enough thickness of the recording layer 101. Accordingly, it is desirable that the numerical aperture NA of the first objective lens 38 is equal to or less than 0.95.

It is desirable that the numerical aperture NA of the second objective lens 79 is equal to or less than 0.65 in order to increase the tilt margins and to secure enough thickness t3 of the base plate 103. Moreover, if the numerical aperture NA of the second objective lens 79 is too small, the area of the focal-point-close area Af2 may unnecessarily increase, increasing the loss of energy of the blue optical beam Lb2. Accordingly, it is desirable that the numerical aperture NA of the second objective lens 79 is equal to or less than 0.2.

(5-3) Reproduction of Information from Optical Disc

When reproducing information from the optical disc 100, the control section 21 (FIG. 9) of the optical disc device 20 lets the guide surface position control optical system 30 (FIG. 12) of the optical pickup 26 emit the red optical beam Lr1 to the guide surface 100A of the optical disc 100. And the control section 21 lets the driving control section 22 perform the focus control and tracking control processes of the first objective lens 38 (i.e. position control) based on the result of detecting the reflection, or the red reflection optical beam Lr2.

Moreover, the control section 21 lets the guide surface information optical system 50 (FIG. 14) emit the blue optical beam Lb1 to the guide surface 100A of the optical disc 100. At this time, since it is being collected by the first objective lens 38 whose position is under control, the focal point Fb1 of the blue optical beam Lb1 is positioned right behind the target track.

Incidentally, the control section 21 restrains the output power of the laser diode 51 for the reproduction process. This prevents the recording mark RM from being erased mistakenly by the blue optical beam Lb1.

Furthermore, the control section 21 adjusts the position of the movable lens 61 of the relay lens 60 to make the depth d1 of the focal point Fb1 (FIG. 7B) equal to the target depth. As a result, the focal point Fb1 of the blue optical beam Lb1 is placed at the target mark position.

On the other hand, the control section 21 controls the shutter 71 of the recording beam exposure surface optical system 70 (FIG. 15) to block the blue optical beam Lb2, preventing the blue optical beam Lb2 from reaching the optical disc 100.

That is, the optical pickup 26 emits only the blue optical beam Lb1, as a so-called reference beam, to the recording mark RM recorded at the target mark position inside the recording layer 101 of the optical disc 100. In response, the recording mark RM works as a hologram, producing the blue reflection optical beam Lb3, as a so-called reproduction beam, toward the guide surface 101A. At this time, the guide surface information optical system 50 detects the blue reproduction optical beam Lb3, and then generates detection signals based on the result of detection.

In this manner, the control section 21 of the optical disc device 20 allows the recording mark RM recorded at the target mark position inside the recording layer 101 of the optical disc 100 to produce the blue reproduction optical beam Lb3, and receives it. Accordingly, the control section 21 can detect the recorded recording marks RM.

In the optical disc device 20, if there is no recording mark RM at the target mark position, the blue reproduction optical beam Lb3 does not occur from the target mark position. Accordingly, the guide surface information optical system 50 produces a detection signal that indicates that it did not receive the blue reproduction beam Lb3.

Based on the detection signals, the signal processing section 22 recognizes the value of "0" or "1" depending on whether the blue reproduction optical beam Lb3 is detected, and generates reproduction information based on the result of recognition.

Accordingly, since optical disc device 20 either receives the blue reproduction optical beam Lb3 when the recording mark RM is formed at the target mark position inside the recording layer 101 of the optical disc 100 or does not receive the blue reproduction optical beam Lb3 when the recording mark RM is not formed at the target mark position, the optical disc device 20 can recognize the value of "1" or "0" recorded at the target mark position. As a result, the information recorded on the recording layer 101 of the optical disc 100 can be reproduced.

In this manner, the optical disc device 20 emits the blue optical beams Lb1 and Lb2 from the first objective lens 38 and the second objective lens 79, respectively: the numerical aperture NA of the first objective lens 38 is about 0.85, while the numerical aperture NA of the second objective lens 79 is about two-thirds of the first objective lens 38, or about 0.55. In this manner, the recording and reproduction processes of the optical disc 100 are performed.

Moreover, as for the optical disc 100, the thickness t2 of the base plate 102, which is close to the first objective lens 38 than the base plate 103 is, is set at 0.04 mm, while the thickness t3 of the base plate 103, which is close to the second objective lens 79, is set at 1.0 mm.

Accordingly, in the optical disc device 20, despite the large numerical aperture NA of the first objective lens 38, the tilt aberration, which occurs with respect to the inclination of the optical disc 100 due to the thin thickness t2 of the base plate 102, can be reduced, making it possible to secure the tilt margins.

Moreover, in the optical disc device 20, despite the large thickness t3 of the base plate 103, the small numerical aperture NA of the second objective lens 79 reduces the tilt aberration, making it possible to secure the tilt margins.

(6) Characteristic of Recording Mark

The following describes the result of simulation on an interfering beam DB1 that is formed when the numerical aperture NA of the first objective lens 38 is 0.85 and the numerical aperture NA of the second objective lens 79 is 0.55.

For comparison, the simulation on an interfering beams DB and DB3 is also conducted: the interfering beam DB is formed when the numerical aperture NA of the first objective lens 38 and the numerical aperture NA of the second objective lens 79 are the same - 0.85; the interfering beam DB3 is formed when the numerical aperture NA of the first objective lens 38 and the numerical aperture NA of the second objective lens 79 are the same - 0.55.

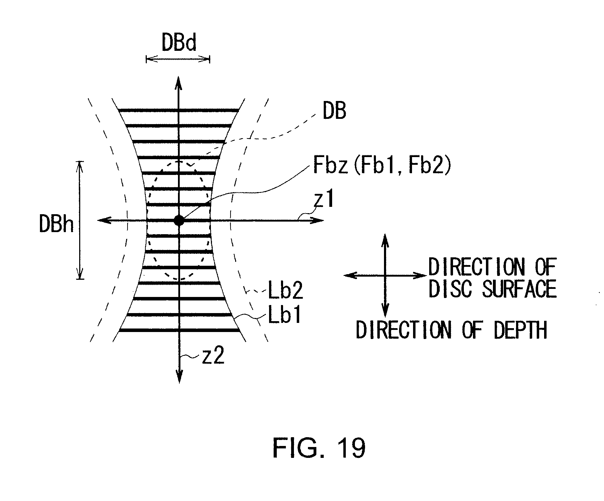

As shown in FIG. 19, in this simulation, the interfering beam DB represents an area having a focal point diameter DBb and a height DBh (described later) regarding an interfering beam that occurs when the focal point Fb1 of the blue optical beam Lb1 is precisely coincident with the focal point Fb2 of the blue optical beam Lb2 (the point where the focal point Fb1 and the focal point Fb2 overlap one another is also referred to as "focal point Fbz").

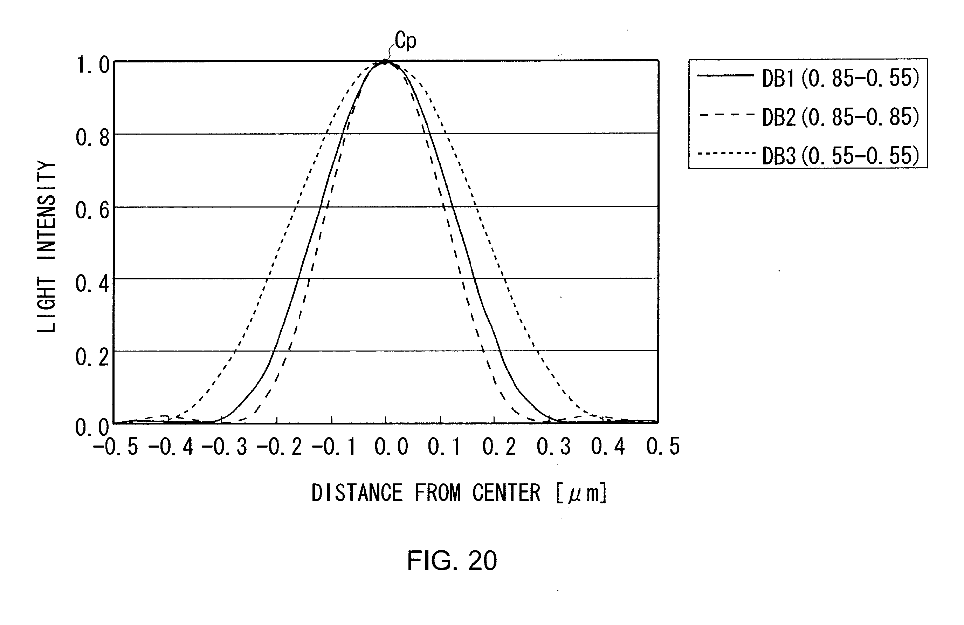

A graph of FIG. 20 shows the light intensity distribution (referred to as "surface-direction light intensity distribution") of the interfering beam DB (DB1 to DB3) along a line Z1 (FIG. 19) that passes through the focal point Fbz in the direction of a disc surface parallel to the optical disc 100. The graph's center represents the focal point Fbz.

It is obvious from the graph that the surface-direction light intensity distribution of the interfering beam DB1 is quite narrower than that of the interfering beam DB3. Even though the surface-direction light intensity distribution of the interfering beam DB1 is slightly broader than that of the interfering beam DB2, the surface-direction light intensity distribution of the interfering beam DB1 resembles that of the interfering beam DB2.

As for this surface-direction light intensity distribution, if the focal point diameter DBd of the interfering beam DB is a diameter of the interfering beam DB whose light intensity is $1/e^2$ (e=2.718) of a central light intensity Cp which is equivalent to the light intensity of the focal point Fbz, the focal point diameter DBd1 of the interfering beam DB1 is 0.46 $\mu$m, the focal point diameter DBd2 of the interfering beam DB2 is 0.39 $\mu$m, and the focal point diameter DBd3 of the interfering beam DB3 is 0.61 $\mu$m.

That is, the focal point diameter DBd1 of the interfering beam DB1 is slightly larger than the focal point diameter DBd2 of the interfering beam DB2, but is quite smaller than the focal point diameter DBd3 of the interfering beam DB3. The focal point diameter DBd1 of the interfering beam DB1 is close to the focal point diameter DBd2.

Incidentally, when it is viewed in the disc-surface direction, the area of the interfering beam DB1 including the focal point Fbz has increased about 28 percent compared with the interfering beam DB2, and decreased about 76 percent compared with the interfering beam DB3. In other words, since the optical disc device 20 uses the first objective lens 38 having the numerical aperture NA of 0.85 and the second objective lens 79 having the numerical aperture NA of 0.55, the recording density per mark recording layer Lm has dropped about 28 percent compared with a case in which the first and second objective lens both having the numerical aperture NA of 0.85 are used.

Moreover, compared with a case in which the first and second objective lens both having the numerical aperture NA of 0.55 are used, the recording density per mark recording layer Lm has increased about 76 percent.

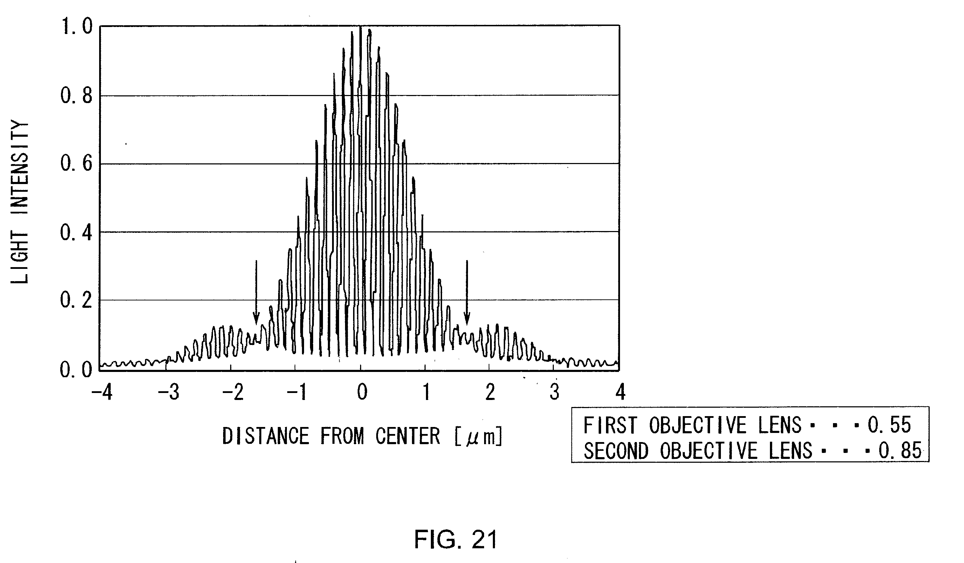

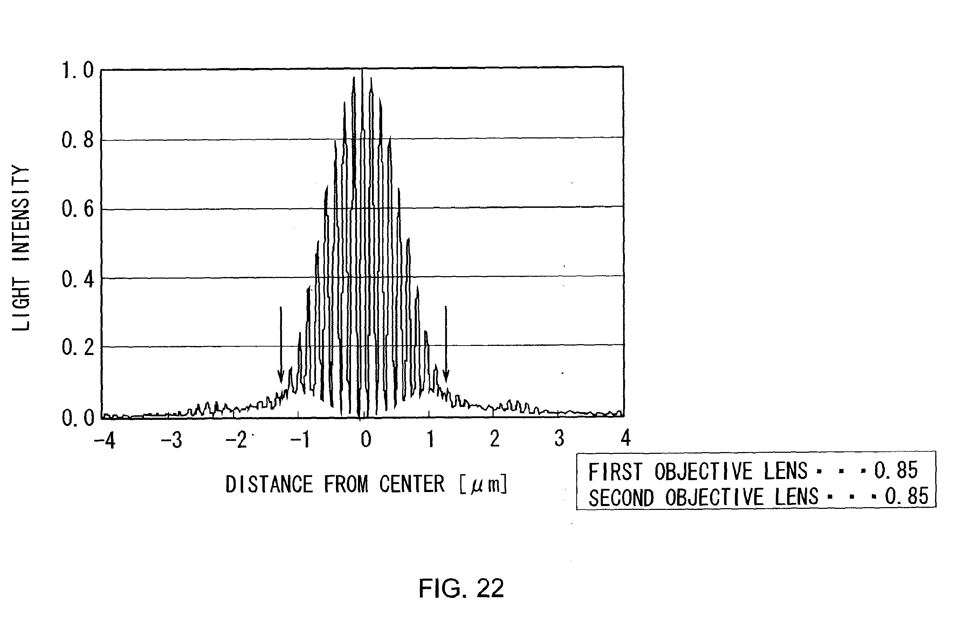

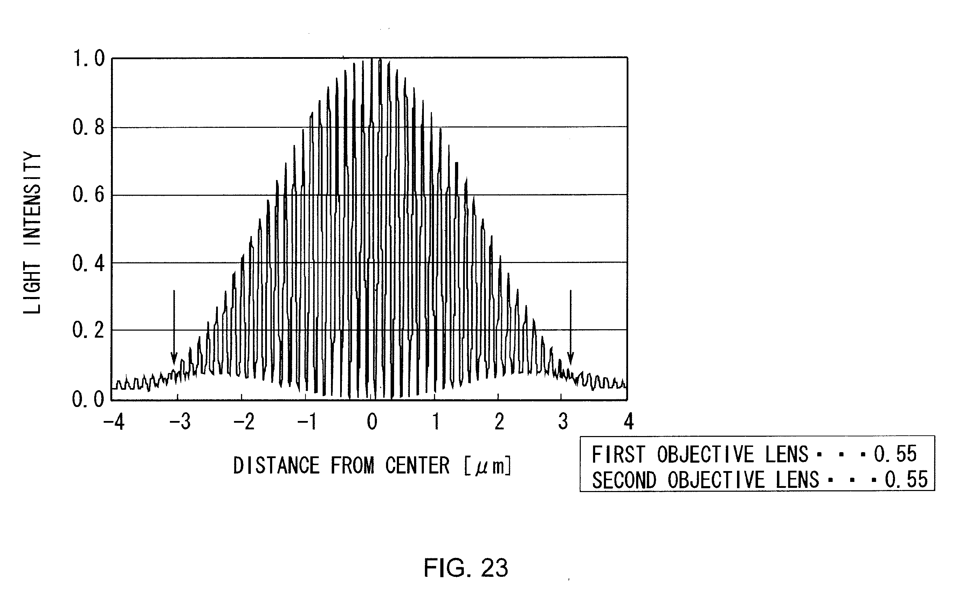

Moreover, the graphs of FIGS. 21 to 23 show the light intensity distribution (referred to as "depth-direction light intensity distribution") of the interfering beam DB (DB1 to DB3) along a line that passes through the focal point Fbz in the direction perpendicular to the optical disc 100. The graph's center represents the focal point Fbz.

If the portions where the light intensity are dented (indicated by arrows in diagrams) represent the height DBh of each interfering beam DB, the height DBh1 of the interfering beam DB1 is 3.4 $\mu$m, the height of the interfering beam DB2 is 2.6 $\mu$m, and the height of the interfering beam DB3 is 6.4 $\mu$m. This means that the height DBh1 of the interfering beam DB1 is close to that of the interfering beam DB2, whose focal point diameter is also close to that of the interfering beam DB1. Accordingly, the interfering beam DB1 resembles the interfering beam DB2.

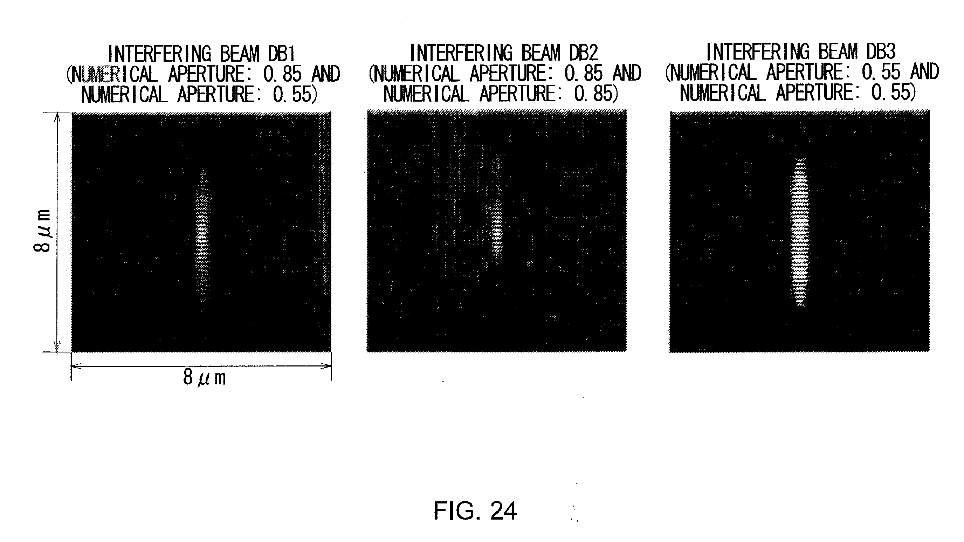

FIG. 24 schematically illustrates the interfering beams DB1 to DB3. The interfering beam DB1 is far smaller than the interfering beam DB3, and resembles the interfering beam DB2.

The following describes de-track dependency of imaginary recording marks RC1 to RC3 based on the interfering beams DB1 to DB3 when imaginary recording marks are regarded as imaginary recording marks RC.

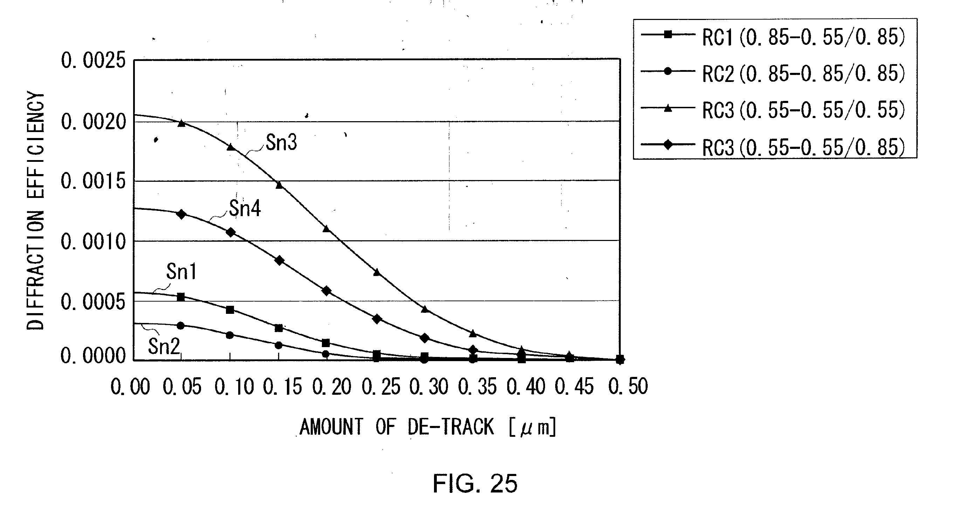

In FIG. 25, curving lines Sn1 to Sn4 represents diffraction efficiency (i.e. the ratio of the amount of light regarding the blue reproduction optical beam Lb3 that occurs as a result of the reflection by the imaginary recording mark RC) when the blue optical beam LB1 is moved away, or de-tracked, from the target mark position in the radial direction of the optical disc 100. In this case, as for each imaginary recording mark RC (RC1 to RC3), the focal point Fb (or the target mark position) of each interfering beam DB that forms each imaginary recording mark RC is a reference (the amount of de-track is 0 $\mu$m).

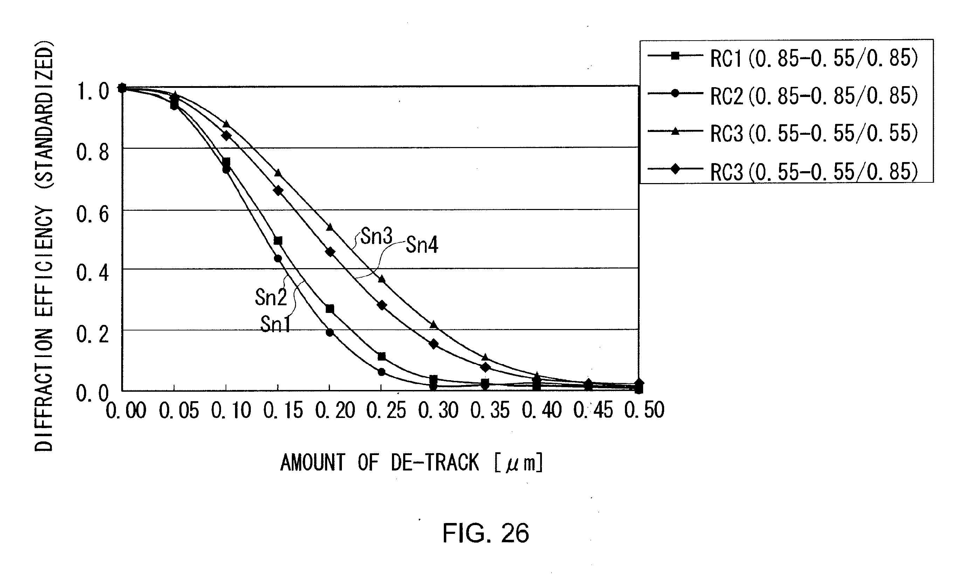

Incidentally, the curving lines Sn1 to Sn3 represent diffraction efficiency when the blue optical beam Lb1 is emitted to each imaginary recording mark RC1, RC2, and RC3 via an objective lens having the numerical aperture NA of 0.85. The curving line Sn4 represents diffraction efficiency when the blue optical beam Lb1 is emitted to the imaginary recording mark RC3 via an objective lens having the numerical aperture NA of 0.55. A graph of FIG. 26 shows the normalized graph of FIG. 25.

As for the curving line Sn2 for the imaginary recording mark RC2, the diffraction efficiency dramatically drops with respect to the amount of de-track. As for the curving line Sn4 for the imaginary recording mark RC3 (the numerical aperture NA = 0.55), the diffraction efficiency gradually drops with respect to the amount of de-track. Moreover, the curving line Sn1 for the imaginary recording mark RC1 resembles the curving line Sn2. Accordingly, the de-track dependency of the imaginary recording mark RC1 is close to that of the imaginary recording mark RC2.

Incidentally, as for the curving line Sn3 for the imaginary recording mark RC3 (in this case, the blue optical beam Lb1 is emitted via an objective lens having the numerical aperture NA of 0.85), the diffraction efficiency gradually drops compared with the imaginary recording marks RC1 and RC2. Accordingly, it turns out that not only the numerical aperture NA of the objective lens but the imaginary recording mark RC3 itself affects the de-track dependency.

Here, the specification of Magneto-Optical disk (MO) specifies that, to prevent crosstalk, the diffraction efficiency between adjacent recording marks should be equal to the result of subtracting 26 dB or more from the diffraction efficiency of the focal point Fb. The following numbers are a distance from the target mark position to each imaginary recording mark to make the diffraction efficiency of each interfering beam DB less than or equal to -26 dB: 0.29 $\mu$m for the imaginary recording mark RC1, 0.26 $\mu$m for the imaginary recording mark RC2, 0.38 $\mu$m for the imaginary recording mark RC3 (with the numerical aperture NA = 0.85), and 0.4 $\mu$m for the imaginary recording mark RC3 (with the numerical aperture NA = 0.55).

If those values, or the distances, are doubled and the imaginary recording marks RC are formed on the optical disc 100 with the doubled distances, the recording density of the imaginary recording mark RC1 will be about 80 percent of the imaginary recording mark RC2's recording density, or about 200 percent of the imaginary recording mark RC3's recording density.

Accordingly, using the second objective lens 79 whose numerical aperture NA is 0.55 allows the base plate 103 to be made thick without dramatically changing the recording density per mark recording layer Lm, compared with when two objective lens whose numerical apertures NA are both 0.85 are used.

The following describes de-focus dependency of the imaginary recording marks RC (RC1 to RC3) formed based on each interfering beam DB.

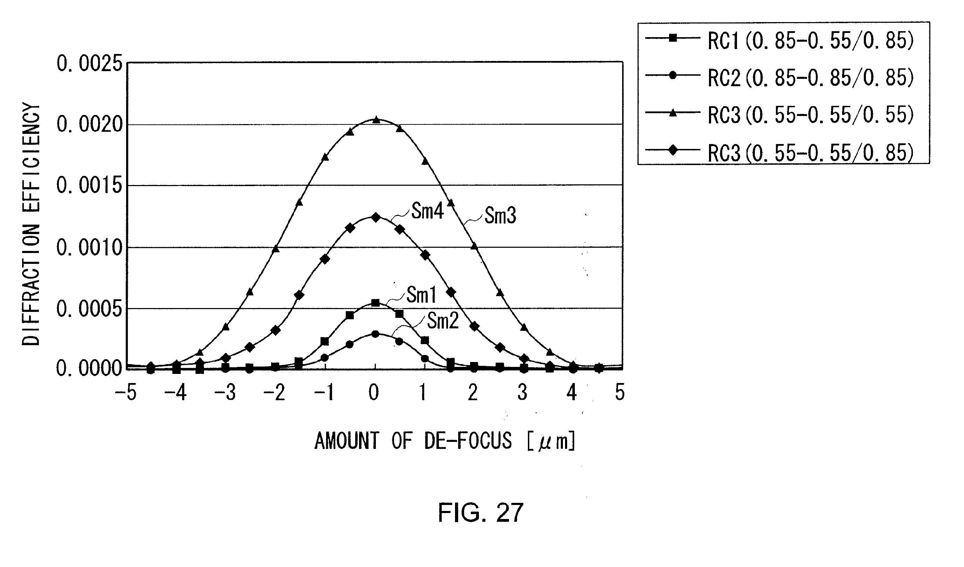

In FIG. 27, curving lines Sm1 to Sm4 represents diffraction efficiency when the blue optical beam LB1 is moved away, or defocused, from the target mark position in the focus direction. In this case, as for each imaginary recording mark RC (RC1 to RC3), the target mark position is a reference (the amount of de-focus is 0 $\mu$m).

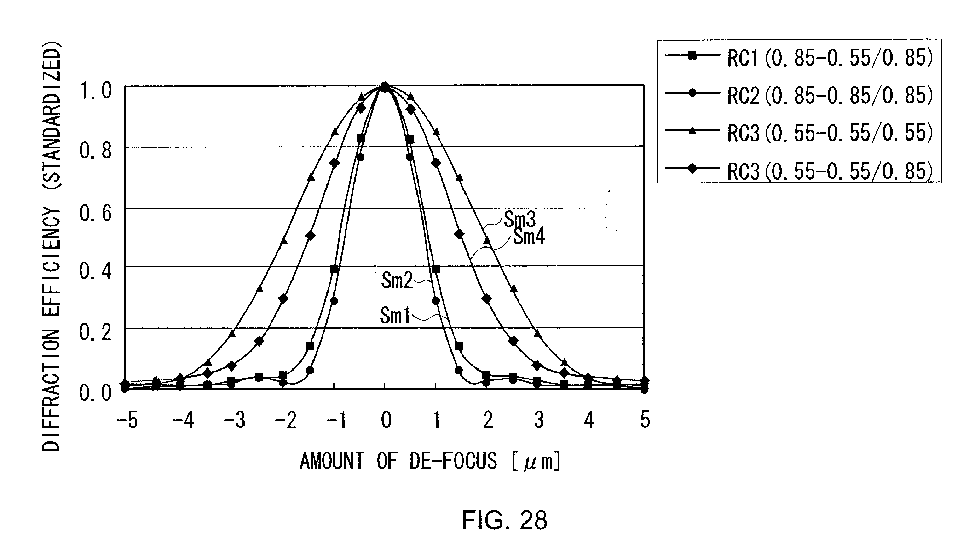

Incidentally, like those shown in FIGS. 25 and 26, the curving lines Sm1 to Sm3 represent diffraction efficiency when the blue optical beam Lb1 is emitted to each imaginary recording mark RC1, RC2, and RC3 via an objective lens having the numerical aperture NA of 0.85. The curving line Sm4 represents diffraction efficiency when the blue optical beam Lb1 is emitted to the imaginary recording mark RC3 via an objective lens having the numerical aperture NA of 0.55. A graph of FIG. 28 shows the normalized graph of FIG. 27.

In the graphs, as for the curving line Sm2 for the imaginary recording mark RC2, the diffraction efficiency dramatically drops with respect to the amount of de-focus. As for the curving lines Sm3 and Sm4 for the imaginary recording mark RC3, the diffraction efficiency gradually drops with respect to the amount of de-focus. Moreover, the curving line Sm1 for the imaginary recording mark RC1 resembles the curving line Sm2 for the imaginary recording mark RC2. Accordingly, it turns out that the de-focus dependency of the imaginary recording mark RC1 is close to that of the imaginary recording mark RC2.

The following numbers are a distance from the target mark position to each imaginary recording mark to make the diffraction efficiency of each interfering beam DB less than or equal to -26 dB: 2.0 $\mu$m for the imaginary recording mark RC1, 1.5 $\mu$m for the imaginary recording mark RC2, 3.5 $\mu$m for the imaginary recording mark RC3 (with the numerical aperture NA = 0.85), and 3.7 $\mu$m for the imaginary recording mark RC3 (with the numerical aperture NA = 0.55).

Accordingly, like the case in which the recording density per mark recording layer Lm is considered, the distance between the imaginary recording marks RC1 can be shorten to around the distance between the imaginary recording marks RC2.

In this manner, the characteristics of the interfering beam DB1 and imaginary recording mark RC1 that are formed using the objective lenses having the numerical aperture NA of 0.85 and 0.55 are close to the characteristics of the interfering beam DB2 and imaginary recording mark RC2 that are formed using the first and second objective lenses both having the numerical aperture NA of 0.85.

Accordingly, as for the optical disc 100, the first objective lens 38 having the numerical aperture NA of 0.85 and the second objective lens 79 having the numerical aperture NA of 0.55 are used. Therefore, compared with when two objective lens both having the numerical aperture NA of 0.85 are used, the thickness t3 of the base plate 103 can be made thick to increase mechanical strength of the optical disc 100 without dramatically changing the recording density.

(7) Operation and Effect

As described above, the optical disc 100 includes the recording layer 101 on which an interfering beam is recorded as a hologram: the interfering beam is formed where the blue optical beam Lb1, or a first beam, and the blue optical beam Lb2, or a second beam, overlap each other. The blue optical beams Lb1 and Lb2 are emitted from the same light source. The converging angle $\alpha$ of the blue optical beam Lb2 is smaller than that of the blue optical beam Lb1.

Moreover, the optical disc 100 includes the base plates 102 and 103: the base plate 102 covers the recording layer 101's one surface to which the blue optical beam Lb1 is emitted, and allows the blue optical beam Lb1 to pass therethrough; the base plate 103 that is made thicker than the base plate 102 covers the recording layer 101's other surface to which the blue optical beam Lb2 is emitted, and allows the second beam to pass therethrough.

Accordingly, as for the optical disc 100, it is possible to increase the thickness t3 of the base plate 103 to secure mechanical strength of the optical disc 100. At the same time, it is possible to reduce the beam waist diameter S1 by emitting the blue optical beam Lb1 to the base plate 102 whose thickness t2 is small. As a result, on the optical disc 100, the small recording marks RM can be formed by the small interfering beams that are formed where the focal-point-close areas Af1 and Af2 overlap each other. Therefore, the mechanical strength of the optical disc 100 is secured, and the recording density increases.

The optical disc 100 includes the reflection and transmission film 104 that reflects the red optical beam Lr1, or a third beam, while allowing most or all of the blue optical beams Lb1 and Lb2 to pass therethrough. The red optical beam Lr1 comes from the same direction as the blue optical beam Lb1 does.

Accordingly, the red reflection optical beam Lr2, or the reflection from the reflection and transmission film 104 of the optical disc 100, allows the optical disc device 20 to perform the tracking control process.

Moreover, the optical disc 100 is a discoid optical disc. Accordingly, the smooth reading and recording processes can be realized by rotating the optical disc 100.

According to the above configuration, as for the optical disc 100, an aberration related to the inclination of the optical disc 100 can be curbed by making the thickness t2 of the base plate 102 small. This allows the optical disc device 20 to use the first objective lens 38 having the large numerical aperture NA, which is considered to increase the aberration related to the inclination of the optical disc 100 due to the large converging angle $\alpha 1$, and therefore makes it possible to reduce the size of the recording mark RM. Moreover, the optical disc 100 allows the optical disc device 20 to use the second objective lens 79 having the small numerical aperture NA, which is considered to decrease the aberration related to the inclination of the optical disc due to the small converging angle $\alpha 2$, and therefore makes it possible to increase the thickness t3 of the base plate 103 to increase mechanical strength of the optical disc 100. As a result, the optical information recording medium, which can reduce the size of the recording mark to increase the recording density and secure enough mechanical strength, can be realized.

(8) Other Embodiments

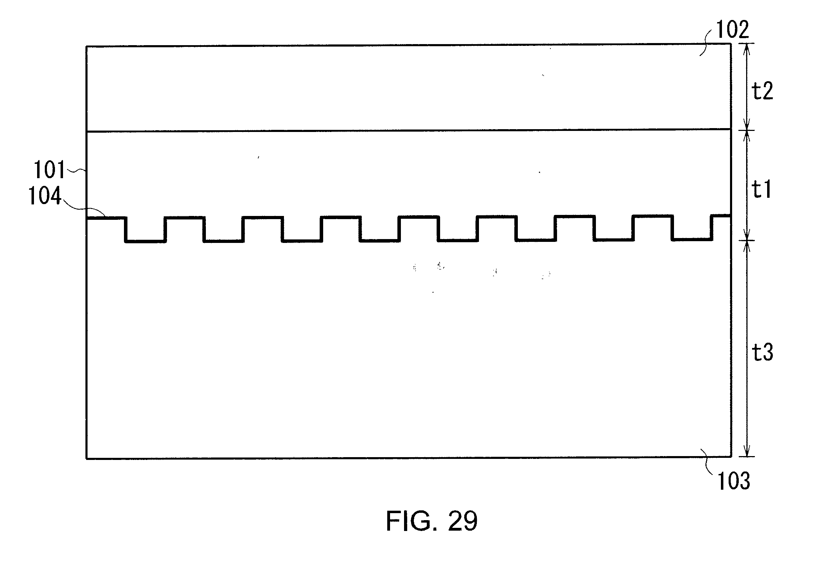

In the above-noted embodiment, the reflection and transmission film 104 is formed at a boundary between the recording layer 101 and the base plate 102. However, the present invention is not limited to this. For example, as shown in FIG. 29, the reflection and transmission film 104 may be formed at a boundary between the recording layer 101 and the base plate 103.

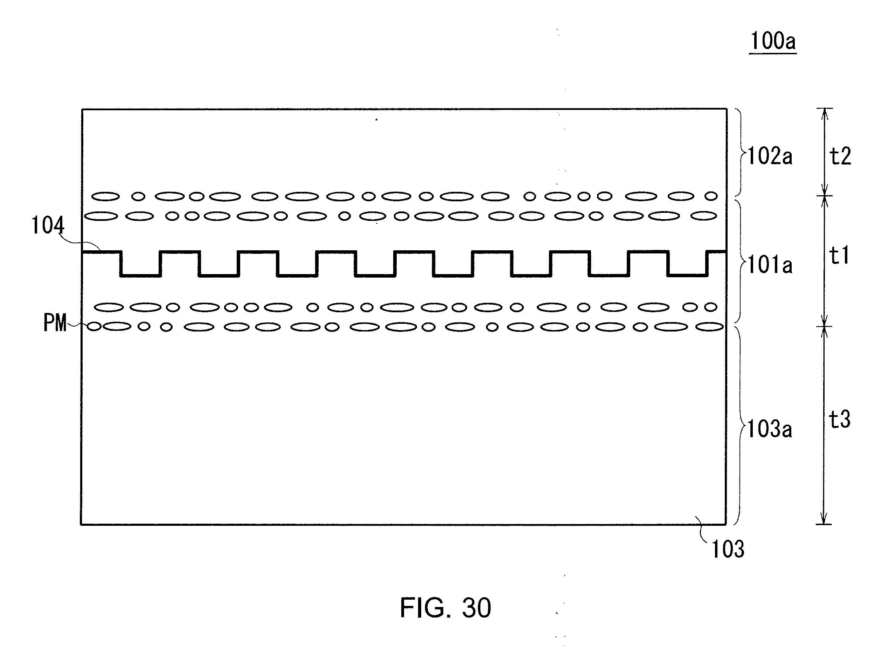

Moreover, in the above-noted embodiment, the recording layer 101, and the base plates 102 and 103 are made from different materials, and form a layering structure in which the recording layer 101, and the base plates 102 and 103 pile up. However, the present invention is not limited to this. For example, as shown in FIG. 30, an optical disc 100a may include a recording area 101a, and base areas 102a and 103a: recording marks RM are recorded on the recording area 101a, which is protected by the base areas 102a and 103a. The reflection and transmission film 104 may not necessarily be formed between a boundary between the recording area 101a and the base area 102a or 103a: the reflection and transmission film 104 may be formed inside the recording layer 101a or on the surface of the base area 102a.

Furthermore, in the above-noted embodiment, the reflection and transmission film 104 is a dichroic film that allows most of the blue optical beams Lb1 and Lb2 to pass therethrough while reflecting most of the red optical beam Lr. However the present invention is not limited to this. The reflection and transmission film 104 may allow most of the blue optical beams Lb1 and Lb2 (80 percent, for example) to pass therethrough while reflecting part of the red optical beam Lr (20 percent, for example). Alternatively, the reflection and transmission film 104 may allow part of the blue optical beams Lb1 and Lb2 (50 percent, for example) to pass therethrough, or reflect them. Moreover, the third beam is not necessarily to be the read optical beam Lr: the third beam could be an optical beam having the same wavelength as the blue optical beams Lb1 and Lb2, an optical beam whose color is different, or the like.

Furthermore, in the above-noted embodiment, the recording marks RM, or holograms, are recorded on the discoid optical disc 100. However, the present invention is not limited to this. The recording marks RM may be formed on a cubic optical information recording medium.

Furthermore, in the above-noted embodiment, the four recording marks RM are recorded in the direction of the optical axis of the blue optical beams Lb1 and Lb2 (i.e. they are recorded on the four recording mark layers Lm). However, the present invention is not limited to this. Any number of the recording marks RM may be formed. For example, only one recording mark RM may be recorded, or 20 recording marks RM can be recorded.

Furthermore, in the above-noted embodiment, the recording marks RM having the same length are recorded when needed. However, the present invention is not limited to this. For example, as shown in FIG. 30, the recording marks RM recorded on BD or DVD may have different length.

Furthermore, in the above-noted embodiment, the second objective lens 79 is driven in the tracking direction so that the optical axis Lx1 of the blue optical beam Lb1 is precisely coincident with the optical axis Lx2 of the blue optical beam Lb2. However, the present invention is not limited to this. For example, the second objective lens 79 may be driven based on the tracking error signal STEb, like the first objective lens 38.

At this time, if the optical disc 100 is skewed or curved, the focal point Fb2 of the blue optical beam Lb2 slightly deviates from the target mark position. However, there is no problem, as long as the blue optical beam Lb2 is emitted so that the focal point Fb2 is positioned near the target position and the focal-point-close areas Af1 and Af2 overlap one another.

That is, the optical disc device 20 can correctly form the recording marks RM at the target mark positions in accordance with the blue optical beam Lb1, as long as the focal point Fb1 of the blue optical beam Lb1 whose beam waist diameter S1 is small is precisely placed at the target mark position.

Accordingly, the optical components (the polarizing beam splitter 72, the condenser lens 80, the cylindrical lens 81, and the photodetector 82), which are used to make the optical axis Lx2 of the blue optical beam Lb2 coincident with the optical axis Lx1 of the blue optical beam Lb1, are unnecessary, simplifying the structure of the optical pickup.

Furthermore, in the above-noted embodiment, the numerical aperture NA of the second objective lens 79 is smaller than the numerical aperture NA of the first objective lens 38; the converging state of the blue optical beam Lb2 is adjusted by the relay lens 75 to make the second converging angle $\alpha 2$ smaller than the first converging angle $\alpha 1$ and to place the focal point Fb2 at the target depth. However, the present invention is not limited to this. As the second objective lens 79, the same product as the first objective lens 38 can be used; such optical components as various lenses and apertures can be provided before the second objective lens 79 to make the diameter of the blue optical beam Lb2 small, so that the diameter of the blue optical beam Lb2 entering the second objective lens 79 is smaller than that of the blue optical beam Lb1 entering the first objective lens. This configuration can offer the same effect as the above-noted embodiment.

Moreover, the refractive indexes and numerical apertures NA of the first and second objective lens 38 and 79, and the converging state and diameter of the blue optical beams Lb1 and Lb2 entering the first and second objective lens 38 and 79 can be appropriately selected to make the second converging angle $\alpha 2$ smaller than the first converging angle $\alpha 1$ and to place the focal point Fb2 at the target depth.

Furthermore, in the above-noted embodiment, the second converging angle $\alpha 2$ is about one-half of the first converging angle $\alpha 1$. However, the present invention is not limited to this. The second converging angle $\alpha 2$ can be appropriately determined according to various situations, including the degree of accuracy of the tracking control process for the blue optical beam Lb2, the degree of curve of the optical disc 100, and the light intensity of the output blue optical beam Lb0.

Furthermore, in the above-noted embodiment, the light intensity and density of the blue optical beam Lb1 around the focal point Fb1 is almost the same as that of the blue optical beam Lb2 around the focal point Fb2. However, the present invention is not limited to this. They may be different from each other.

Furthermore, in the above-noted embodiment, during the reproduction process, the blue optical beam Lb1 whose beam waist diameter S1 is small is emitted to the recording layer 101. However, the present invention is not limited to this. Instead, the blue optical beam Lb2 can be emitted to the recording layer 101.

Furthermore, in the above-noted embodiment, the ratio of the blue optical beams Lb1 and Lb2 is adjusted by the 1/2 wave plate 53 and the polarizing beam splitter 55 to adjust the light intensity and density around the focal points Fb1 and Fb2. However, the present invention is not limited to this. Various methods, including the so-called ND filters that cut off a predetermined amount of the blue optical beam Lb1, can be applied.

Furthermore, in the above-noted embodiment, the recording marks RM are formed on the discoid optical disc 100. However, the present invention is not limited to this. For example, the recording marks RM can be formed on an optical information recording medium that is a rectangular parallelepiped in shape.

Furthermore, in the above-noted embodiment, the optical disc 100, which is the equivalent of an optical information recording medium, includes the recording layer 101, which is the equivalent of a recording area, the base plate 102, which is the equivalent of a first base area, and the base plate 103, which is the equivalent of a second base area. However, the present invention is not limited to this. The optical information recording medium can include the recording layer, first base area and second base area that have different structures.

The above method can be applied to a recording medium that can record a large amount of various kinds of data, including music content and video content.

It should be understood by those skilled in the art that various modifications, combinations, sub-combinations and alterations may occur depending on design requirements and other factors insofar as they are within the scope of the appended claims or the equivalents thereof.

**Claims**

1. An optical information recording medium comprising:

   a recording area on which an interfering beam formed where a first beam and a second beam whose converging angle is smaller than that of the first beam overlap each other is recorded as a hologram, the first and second beams being emitted from the same light source with the first beam directed to one surface and the second beam directed to the other surface;
   a first base area that covers the recording area's one surface to which the first beam is emitted, and allows the first beam to pass therethrough; and
   a second base area that is made thicker than the first base area, covers the recording area's other surface to which the second beam is emitted, and allows the second beam to pass therethrough.

2. The optical information recording medium according to claim 1, further comprising
   a reflection and transmission film that reflects at least part of a third beam coming from the same direction as the first or second beam does while allowing part or all of the first and second beams to pass therethrough.

3. The optical information recording medium according to claim 2, wherein
   the reflection and transmission film is a dichroic film that allows most of the first and second beams to pass therethrough while reflecting most of the third beam whose wavelength is different from the wavelengths of the first and second beams.

4. The optical information recording medium according to claim 1,2 or 3 wherein
   the optical information recording medium is a discoid optical disc.

5. The optical information recording medium according to one of the claims 1 to 4, wherein
   on the recording area, the holograms are recorded along a direction of an optical axis of the first and second beam.

6. The optical information recording medium according to one of the claims 1 to 5, wherein
   the first base area is greater than or equal to 0.01 mm and less than or equal to 0.2 mm.

7. The optical information recording medium according to one of the claims 1 to 6, wherein
   the second base area is greater than or equal to 0.4 mm and less than or equal to 1.5 mm.

FIG. 1A (RELATED ART)

EP 2 045 802 A1

FIG. 2A (RELATED ART)

FIG. 2B (RELATED ART)

FIG. 3(RELATED ART)

LY2 BASE PLATE

LY1 RECORDING LAYER

LY3 BASE PLATE

OL1

OL2

Lb1

Fb1, Fb2

Lb2

t2 t1 t3

FIG. 4

EP 2 045 802 A1

FIG. 5

EP 2 045 802 A1

FIG. 6A

FIG. 6B

FIG. 7A

100H HOLE

100 OPTICAL DISC

100 OPTICAL DISC

BASE PLATE 102

101 RECORDING LAYER

103 BASE PLATE

REFLECTION AND
TRANSMISSION LAYER 104

100H

d(d1, d2)

FIG. 7B

Lb1, Lb3

Lb2

Lr1, Lr2

Fb1, Fb2

Lx

Fr

OBJECTIVE LENS OL1

OL2 OBJECTIVE
LENS

GUIDE SURFACE 100A

100B
RECORDING BEAM
EXPOSURE SURFACE

t2 t1 t3

FIG. 8

EP 2 045 802 A1

<u>20</u>

26 OPTICAL PICKUP

1,00 OPTICAL DISC

25 SLED MOTOR

25A, 25B

24
SPINDLE
MOTOR

DRIVING
CONTROL
SECTION

SIGNAL
PROCESSING
SECTION

23

22

CONTROL
SECTION

21

FIG. 9

100 OPTICAL DISC (INNER CIRCUMFERENCE)

(OUTER CIRCUMFERENCE)

26 OPTICAL PICKUP

25B

25A

FIG. 10

FIG. 11

FIG. 12

a1

43

43A~ ~43D

43B~ ~43C

# FIG. 13

82

82A~ ~82D

82B~ ~82C

a2

# FIG. 16

26 OPTICAL PICKUP

30 GUIDE SURFACE
   POSITION CONTROL
   OPTICAL SYSTEM

100A GUIDE SURFACE
100 OPTICAL DISC
100B RECORDING BEAM
     EXPOSURE SURFACE

50 GUIDE SURFACE
   INFORMATION
   OPTICAL SYSTEM

70 RECORDING BEAM
   EXPOSURE SURFACE
   OPTICAL SYSTEM

FIG. 14

FIG. 15

FIG. 17

EP 2 045 802 A1

FIG. 18

FIG. 19

FIG. 20

EP 2 045 802 A1

FIG. 21

FIG. 22

LIGHT INTENSITY

DISTANCE FROM CENTER [μm]

FIRST OBJECTIVE LENS · · · 0.85
SECOND OBJECTIVE LENS · · · 0.85

FIG. 23

INTERFERING BEAM DB1
(NUMERICAL APERTURE: 0.85 AND
NUMERICAL APERTURE: 0.55)

INTERFERING BEAM DB2
(NUMERICAL APERTURE: 0.85 AND
NUMERICAL APERTURE: 0.85)

INTERFERING BEAM DB3
(NUMERICAL APERTURE: 0.55 AND
NUMERICAL APERTURE: 0.55)

8 μm

8 μm

FIG. 24

EP 2 045 802 A1

FIG. 25

EP 2 045 802 A1

FIG. 26

FIG. 27

FIG. 28

RC1 (0.85-0.55/0.85)
RC2 (0.85-0.85/0.85)
RC3 (0.55-0.55/0.55)
RC3 (0.55-0.55/0.85)

DIFFRACTION EFFICIENCY (STANDARDIZED)

AMOUNT OF DE-FOCUS [$\mu$m]

Sm3
Sm4
Sm2
Sm1

FIG. 29

EP 2 045 802 A1

FIG. 30

Europäisches
Patentamt

European
Patent Office

Office européen
des brevets

# EUROPEAN SEARCH REPORT

Application Number

EP 08 16 5471

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 326 240 A (OPTWARE CORP [JP]) 9 July 2003 (2003-07-09) * paragraph [0047] - paragraph [0077]; figures 1-7,19 * ----- | 1-7 | INV. G11B7/0065 G11B7/007 G11B7/24 G11B7/09 |
| A | US 2005/286386 A1 (EDWARDS JATHAN D [US] ET AL) 29 December 2005 (2005-12-29) * paragraph [0009] - paragraph [0041]; figures 1-7 * ----- | 1-7 | |

TECHNICAL FIELDS
SEARCHED (IPC)

G11B

The present search report has been drawn up for all claims

| Place of search | Date of completion of the search | Examiner |
|---|---|---|
| The Hague | 12 November 2008 | Pacholec, Darek |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 08 16 5471

This annex lists the patent family members relating to the patent documents cited in the above-mentioned European search report.
The members are as contained in the European Patent Office EDP file on
The European Patent Office is in no way liable for these particulars which are merely given for the purpose of information.

12-11-2008

| Patent document cited in search report | | Publication date | Patent family member(s) | | Publication date |
|---|---|---|---|---|---|
| EP 1326240 | A | 09-07-2003 | AU | 9422001 A | 22-04-2002 |
| | | | CN | 1470053 A | 21-01-2004 |
| | | | WO | 0231822 A1 | 18-04-2002 |
| | | | JP | 2002123948 A | 26-04-2002 |
| | | | US | 2004027968 A1 | 12-02-2004 |
| US 2005286386 | A1 | 29-12-2005 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007261345 A

- JP 3452106 B

**Non-patent literature cited in the description**

- **Y.KASAMI ; Y.KURODA ; K.SEO ; O.KAWAKUBO ; S.TAKAGAWA ; M.ONO ; M.YA-MADA.** *Jpn. J. Appl. Phys.,* 2000, vol. 39, 756
- **I.ICHIMURA et al.** *Techinical Digest of ISOM '04,* 11 October 2005, 52

- **R. R. MCLEOD et al.** Microholographic multilayeroptical disk data storage. *Appl. Opt.,* 2005, vol. 44, 3197